# EUROPEAN PATENT APPLICATION

(11) **EP 4 152 854 A1**
(43) Date of publication of application: **22.03.2023**
(21) Application number: 21803877.6
(22) Date of filing: 12.05.2021
(51) Int. Cl.: H04W 72/04

(54) **INFORMATION SENDING METHOD, RESOURCE PROCESSING METHOD, APPARATUS, AND ELECTRONIC DEVICE**

(30) Priority: 12.05.2020 CN 202010399103
(71) Applicant: Vivo Mobile Communication Co., Ltd., Dongguan, Guangdong 523863 (CN)
(72) Inventor: LIU, Shixiao, Dongguan, Guangdong 523863 (CN); JI, Zichao, Dongguan, Guangdong 523863 (CN); PENG, Shuyan, Dongguan, Guangdong 523863 (CN)
(74) Representative: Conti, Marco
(86) International application number: PCT/CN2021/093294
(87) International publication number: WO 2021/228132

(57) **Abstract**

This application discloses an information sending method, a resource processing method, an apparatus, and an electronic device. The sending method includes: sending first information to at least one second device, where the first information is used to assist the second device in selecting or reserving a resource for data transmission.

## Description

### CROSS-REFERENCE TO RELATED APPLICATIONS

This application claims priority to Chinese Patent Application No. 202010399103.5, filed in China on May 12, 2021, which is incorporated herein by reference in its entirety.

### TECHNICAL FIELD

This application belongs to the field of communications, and specifically relates to an information sending method, a resource processing method, an apparatus, and an electronic device.

### BACKGROUND

A long term evolution (Long Term Evolution, LTE) system supports sidelink (sidelink) transmission, where data transmission is directly performed between terminals (User Equipment, UE) at a physical layer. LTE sidelink implements communication based on broadcasting. Although being used to support basic safety communication of vehicle to everything (vehicle to everything, V2X), LTE sidelink is inapplicable to other more advanced V2X services. A 5G NR (New Radio) system may support more advanced sidelink transmission design, such as unicast and multicast or groupcast, so as to support more comprehensive service types.

NR V2X defines two resource allocation modes: mode 1, with resources being scheduled by a base station, and mode 2, with resources for transmission being determined by a terminal. In this case, resource information may come from a broadcast message of a base station or preconfigured information. If the terminal operates within coverage of the base station and has a radio resource control (Radio Resource Control, RRC) connection to the base station, the terminal can operate in mode 1 and/or mode 2; if the terminal operates within the coverage of the base station but has no RRC connection to the base station, the terminal can operate only in mode 2; or if the terminal operates outside the coverage of the base station, the terminal can operate only in mode 2, and V2X transmission is performed according to preconfigured information.

In mode 2, a specific operating manner is as follows: (1) After resource selection is triggered, a transmit terminal first determines a resource selection window. A lower boundary of the resource selection window is at a time T1 after triggering of resource selection, and an upper boundary of the resource selection is at a time T2 after triggering of resource selection, where T2 is a value selected by the terminal within a packet delay budget (Packet Delay Budget, PDB) for transport block (Transport Block, TB) transmission, and T2 is not earlier than T1. (2) Before resource selection, the terminal needs to determine a candidate resource set (candidate resource set) for resource selection, where a reference signal received power (Reference Signal Receiving Power, RSRP) measured on a resource in the resource selection window is compared with a corresponding RSRP threshold, and if the RSRP is lower than the RSRP threshold, the resource can be then included in the candidate resource set. (3) After the resource set is determined, the terminal randomly selects a transmission resource from the candidate resource set. In addition, during a current transmission, the terminal may reserve a transmission resource for a next transmission.

NR V2X also supports chain-type resource reservation. To be specific, in addition to a current reserved resource, a maximum of two extra resources may be reserved by one piece of sidelink control information (Sidelink Control Information, SCI), and then another two reserved resources can be indicated in a next resource. In the selection window, resources may be continuously reserved in a dynamic reservation manner.

As limited by the existing resource allocation modes, sidelink is subject to low reliability and low energy utilization, leading to low reliability in some transmission scenarios. For example, under limitation of half duplex, some terminals are unable to monitor reservation information of other terminals, leading to relatively low reliability; two terminals close to each other may reserve the same resources because of hidden nodes, resulting in resource collision and low reliability.

### SUMMARY

The purpose of embodiments of this application is to provide an information sending method, a resource processing method, an apparatus, and an electronic device, so as to resolve the problem of low reliability of transmission in an existing resource allocation mode.

In order to resolve the foregoing technical problem, this application is implemented as follows:

According to a first aspect, an embodiment of this application provides an information sending method, applied to a first device. The method includes:
sending first information to at least one second device, where the first information is used to assist the second device in selecting or reserving a resource for data transmission.

According to a second aspect, an embodiment of this application provides a resource processing method, applied to a second device. The method includes:
receiving first information sent by a first device; and
selecting or reserving, based on decoding of the first information, a resource for data transmission.

According to a third aspect, an embodiment of this application provides an information sending apparatus, applied to a first device and including:
a sending module, configured to send first information to at least one second device, where the first information is used to assist the second device in selecting or reserving a resource for data transmission.

According to a fourth aspect, an embodiment of this application provides a resource processing apparatus, applied to a second device. The apparatus includes:
a receiving module, configured to receive first information sent by a first device; and
a processing module, configured to: based on decoding of the first information, select or reserve a resource for data transmission.

According to a fifth aspect, an embodiment of this application provides an electronic device, where the electronic device includes a processor, a memory, and a program or an instruction stored in the memory and capable of running on the processor, and when the program or the instruction is executed by the processor, the steps of the method according to the first aspect or the second aspect are implemented.

According to a sixth aspect, an embodiment of this application provides a readable storage medium, where a program or an instruction is stored in the readable storage medium, and when the program or the instruction is executed by a processor, the steps of the method according to the first aspect or the second aspect are implemented.

According to a seventh aspect, an embodiment of this application provides a chip, where the chip includes a processor and a communications interface, the communications interface is coupled to the processor, and the processor is configured to run a program or an instruction to implement the steps of the method according to the first aspect or the second aspect.

In the embodiments of this application, the first information for assisting the second device in selecting or reserving a resource for data transmission is transmitted to at least one second device, which can improve transmission reliability and reduce energy consumption.

### BRIEF DESCRIPTION OF DRAWINGS

FIG. 1 is a schematic flowchart of an information sending method according to an embodiment of this application;
FIG. 2 is a schematic diagram of a scenario 1 according to an embodiment of this application;
FIG. 3 is a schematic diagram of a scenario 2 according to an embodiment of this application;
FIG. 4 is a schematic diagram of a scenario 3 according to an embodiment of this application;
FIG. 5 is a schematic diagram of a scenario 4 according to an embodiment of this application;
FIG. 6 is a flowchart of steps of a resource processing method according to an embodiment of this application;
FIG. 7 is a schematic structural diagram of an information sending apparatus according to an embodiment of this application;
FIG. 8 is a schematic structural diagram of a resource processing apparatus according to an embodiment of this application; and
FIG. 9 is a schematic structural diagram of an electronic device according to an embodiment of this application.

### DESCRIPTION OF EMBODIMENTS

The following clearly and completely describes the technical solutions in the embodiments of this application with reference to the accompanying drawings in the embodiments of this application. Apparently, the described embodiments are only some rather than all of the embodiments of this application. All other embodiments obtained by a person of ordinary skill in the art based on the embodiments of this application without creative efforts shall fall within the protection scope of this application.

In the specification and claims of this application, the terms such as "first" and "second" are intended to distinguish between similar objects but do not necessarily indicate a specific order or sequence. It should be understood that the data used in this way is interchangeable in appropriate circumstances so that the embodiments of this application can be implemented in other orders than the order illustrated or described herein. In addition, "and/or" in this specification and claims indicates at least one of connected objects, and the symbol "/" generally indicates that the associated objects are in an "or" relationship.

The following describes the embodiments of this application with reference to the accompanying drawings. An information sending method, a resource processing method, an apparatus, and an electronic device provided in the embodiments of this application can be applied to a wireless communications system. The wireless communications system may be a 5G system, a long term evolution (Long Term Evolution, LTE) system, an evolved long term evolution (Evolved Long Term Evolution, eLTE) system, or a subsequent evolved communications system. In the embodiments of this application, the LTE and NR systems are used as examples. However, this is not limited to these systems, and the technical solutions provided in this application can be applied to other systems that have the same problem.

An information sending method, a resource processing method, an apparatus, and an electronic device provided by the embodiments of this application are described below in detail by using specific embodiments and application scenarios thereof with reference to the accompanying drawings.

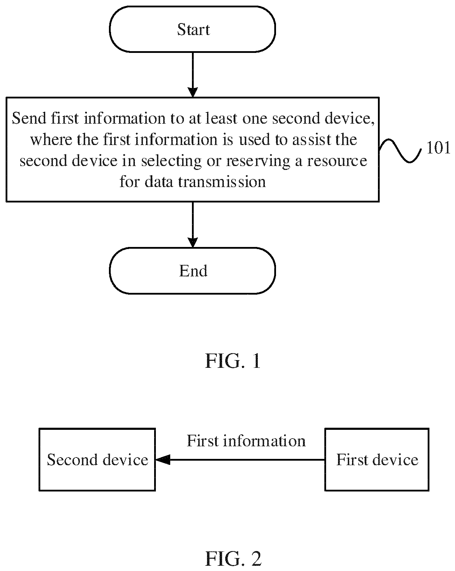

As shown in FIG. 1, an embodiment of this application provides an information sending method, applied to a first device, and the method includes:
Step 101: Send first information to at least one second device, where the first information is used to assist the second device in selecting or reserving a resource for data transmission.

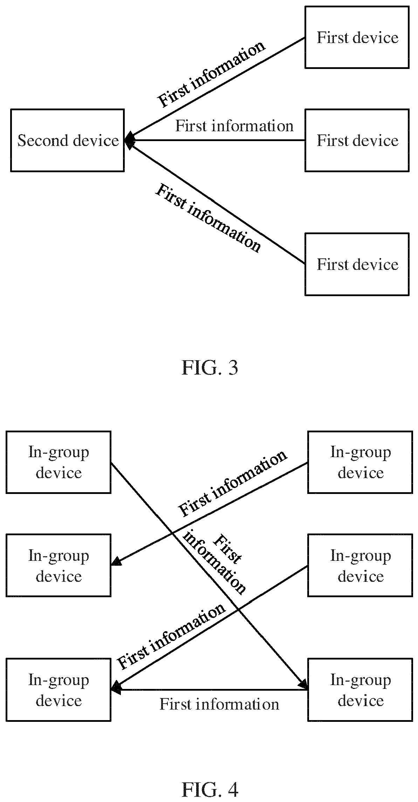

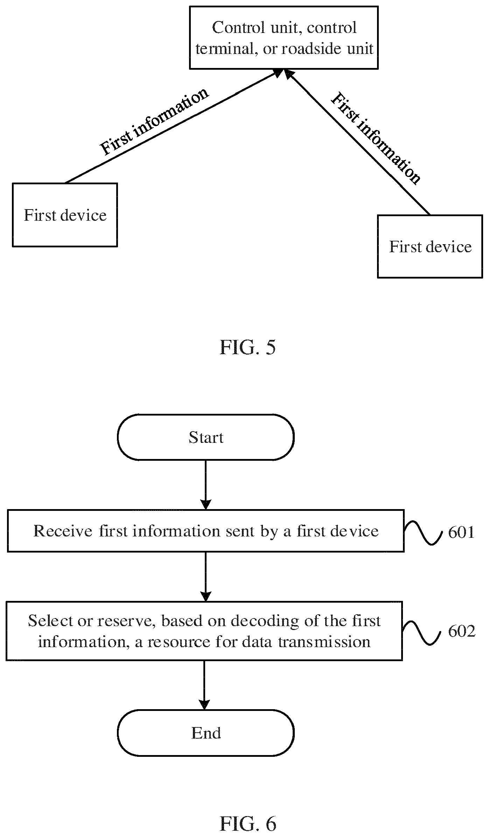

Specific applicable scenarios of this embodiment of this application include at least one of the following:
Scenario 1 is a unicast scenario, as shown in FIG. 2, where the first device sends the first information to the second device, and the second device performs resource selection or resource reservation for data transmission based on a resource indicated by the first information.
Scenario 2 is a groupcast scenario, as shown in FIG. 3, where a plurality of first devices in a group send first information to a second device in the group, and the second device performs resource selection or resource reservation for data transmission based on a resource indicated by the first information.
Scenario 3 is a groupcast scenario, as shown in FIG. 4, where any device in a group sends first information to any other devices in the group, and a device receiving the first information performs resource selection or resource reservation for data transmission based on a resource indicated by the first information.
Scenario 4 is a scenario where a control node, a control terminal, or a roadside unit is present, as shown in FIG. 5, where the first device sends first information to the control node, the control terminal, or the roadside unit, and the control node, the control terminal, or the roadside unit performs resource allocation for the terminal based on the first information.
Scenario 5 is a broadcast scenario, where the first device (any one terminal) may send first information to the second device (any other terminals), and a device receiving the first information performs resource selection or resource reservation based on a resource indicated by the first information.

In an optional embodiment, the first information includes at least one of the following information:
time domain resource indication information, indicating a length, a start position, or an end position of one time domain resource, where one time domain resource or a plurality of time domain resources may be indicated;
frequency domain resource indication information, including at least one of a frequency domain start position, a frequency domain end position, and a frequency domain resource length;
time domain resource position offset information;
frequency domain resource position offset information;
identification information of a first-information transmit end, for identifying the first-information transmit end;
identification information of a first-information receive end, for identifying the first-information receive end, which may be a group ID, a terminal ID, or a group member ID;
type indication information of the first information, for indicating whether the first information is assistance information;
function indication information of the first information; and
applicable range indication information of the first information.

In this embodiment of this application, if the first information includes only a time domain resource position, a length corresponding to one time domain resource is a predefined value or a value configured by the higher layer; or if the first information includes a time domain resource position and a time domain resource length, a length corresponding to one time domain resource is dynamically indicated.

If the first information includes the identification information of the first-information receive end, and the identification information of the first-information receive end is a predefined ID or an ID configured by the higher layer, all corresponding terminals need to receive the first information; if the identification information of the first-information receive end is a group ID, all members corresponding to a specific group need to receive the first information; if the identification information of the first-information receive end is a group user ID, a specific member corresponding to a specific group needs to receive the first information; or if the identification information of the first-information receive end is a terminal ID, a specific corresponding user needs to receive the first information.

Optionally, in this embodiment of this application, the type indication information of the first information is used to indicate at least one of the following:
indicating that the first information is non-assistance information; and
indicating that the first information is assistance information.

Optionally, the type indication information may directly indicate that the first information is dynamic assistance information, or may directly indicate that the first information is semi-static assistance information, which is not specifically limited herein.

Optionally, the first device may select whether the first information is assistance information through autonomous judgment or based on whether trigger information for triggering transmission of the assistance information is received, and the trigger information of the assistance information may be obtained from a control node or other terminals, which is not specifically limited herein.

Optionally, in this embodiment of this application, the function indication information of the first information is used to indicate at least one of the following:
indicating that the second device preferentially selects or preferentially reserves a resource indicated by the first information;
indicating that the second device non-preferentially selects or non-preferentially reserves a resource indicated by the first information;
indicating that the second device is allowed to select or reserve only a resource indicated by the first information; and
indicating that the second device is not allowed to select or reserve a resource indicated by the first information.

Optionally, in this embodiment of this application, the applicable range indication information of the first information is used to indicate at least one of the following:
indicating that the first information is applicable to a unicast transmission mode;
indicating that the first information is applicable to a groupcast transmission mode; and
indicating that the first information is applicable to a broadcast transmission mode.

Optionally, in this embodiment of this application, the first information is carried in target information, and the target information includes at least one of the following:
sidelink control information SCI;
downlink control information DCI;
radio resource control information RRC information;
direct communication link radio resource control information PC5-RRC information; and
sidelink feedback control information SFCI.

The sidelink control information SCI further includes: first-stage sidelink control information (1st stage SCI) and second-stage sidelink control information (2nd stage SCI).

In an optional embodiment, in a case that the first device adds the first information to the first-stage sidelink control information and/or the second-stage sidelink control information,
the type indication information is indicated by a first indication field of the first-stage sidelink control information and/or the second-stage sidelink control information. For example, a first indication field with a length of 1 bit is used for indication, codepoint 0 represents being non-assistance information and codepoint 1 represents being assistance information. The second device determines whether the first information is assistance information based on decoding of the first indication field.

Alternatively, the type indication information is indicated through joint coding with a second indication field in the first-stage sidelink control information and/or the second-stage sidelink control information. For example, the second indication field is a priority indication field, and a specific priority indicated by the priority indication field represents being assistance information, while other priorities represent being non-assistance information. For another example, the second indication field is a DMRS mode indication field, a specific DMRS mode indicated by the DMRS mode indication field represents being assistance information, and other DMRS modes represent being non-assistance information.

Alternatively, the type indication information is indicated by a codepoint in a third indication field of the first-stage sidelink control information and/or the second-stage sidelink control information. For example, a specific codepoint in the third indication field represents being assistance information, and other codepoints represent being non-assistance information.

The second indication field and/or the third indication field includes at least one of the following:
a priority indication field, a resource reservation periodicity indication field, a frequency domain resource allocation indication field, a time domain resource allocation indication field, a demodulation reference signal DMRS mode indication field, a second-stage SCI format indication field, a β offset indication field, a DMRS configuration type indication field, a modulation and coding scheme indication field, a hybrid automatic repeat request HARQ process ID indication field, a new data indication NDI indication field, a redundancy version RV indication field, an information source ID (source ID) indication field, an information destination ID (destination ID) indication field, a channel state information CSI requirement indication field, a communication range (communication range) indication field, and a zone ID (zone ID) indication field.

### Example 1

The type indication information is indicated by an independent indication field of the first-stage SCI. A length of the indication field may be 1 bit, corresponding to two codepoints: 0 and 1. The codepoint 0 correspondingly represents that the information is non-assistance information, and the codepoint 1 correspondingly represents that the information is assistance information.

Similarly, the type indication information is indicated by an independent indication field of the second-stage SCI. A length of the indication field may be 1 bit, corresponding to two codepoints: 0 and 1. The codepoint 0 correspondingly represents that the information carries no assistance information, and the codepoint 1 correspondingly represents that the information carries assistance information.

The type indication information may alternatively indicate, through joint coding with another indication field of the first-stage SCI, whether the first information is assistance information. For example, indication is performed through joint coding with a priority indication field of the first-stage SCI. The existing priority indication field has a length of 3 bits (bits), corresponding to eight codepoints. In a case that the number of bits is not increased, if a codepoint 000 corresponds to a priority 1 and indicates that the first information carried by the first-stage SCI is assistance information, an assistance-information receive end may determine, based on decoding of the priority indication field of the first-stage SCI, whether the first information carried in the first-stage SCI is assistance information. If the number of bits is increased, for example, the number of bits of the priority indication field is increased to 4, corresponding to 16 codepoints, still only eight priority levels can be indicated, each priority indicates being corresponding to two codepoints. For example, a priority 8 corresponds to a codepoint 1110 and a codepoint 1111, where 1110 correspondingly represents a priority level being 8 and no assistance information being carried by the first-stage SCI; and 1111 correspondingly represents a priority level being 8 and the first information carried by the first-stage SCI being assistance information. In addition, existing indication fields further include a frequency domain resource allocation indication field, a time domain resource allocation indication field, a resource reservation periodicity indication field, a DMRS mode indication field, a second-stage SCI format indication field, a beta offset (β offset) indication field, a DMRS port quantity indication field, a modulation and coding scheme indication field, and the like.

The type indication information may alternatively indicate, through joint coding with another indication field of the second-stage SCI, whether the first information is assistance information. For example, indication is performed through joint coding with an RV indication field in the second-stage SCI. The existing priority indication field has a length of 2 bits, corresponding to four codepoints. In a case that the number of bits is not increased, if a codepoint 00 corresponds to an RV version 0 and indicates that the first information carried by the second-stage SCI is assistance information, the assistance-information receive end may determine, based on decoding of the priority indication field of the second-stage SCI, whether the first information carried by the second-stage SCI is assistance information. If the number of bits is increased, for example, the number of bits of the RV indication field is increased to 3, corresponding to eight codepoints, still only four priority levels can be indicated, each priority indicates being corresponding to two codepoints. For example, an RV version 0 corresponds to codepoints 000 and 001, where 000 correspondingly represents an RV version 0 and the first information carried by the second-stage SCI being non-assistance information; and 001 correspondingly represents an RV version 8 and the first information carried by the second-stage SCI being assistance information. In addition, a capability indication field further includes a HARQ process ID indication field, an NDI indication field, a communication range indication field, a source ID indication field, a destination ID indication field, a CSI requirement indication field, a zone ID indication field, and the like.

### Example 2

The type indication information is indicated by a codepoint reserved in an existing indication field of the second-stage SCI. The assistance-information receive end determines, based on decoding of the indication field of the second-stage SCI, whether the first information is assistance information. For example, indication is performed by using a codepoint reserved in the communication range indication field of the second-stage SCI. A length of the communication range indication field is 5 bits, with a plurality of reserved codepoints. For example, a reserved codepoint 11111 is used to indicate that the first information carried by the second-stage SCI is assistance information.

In addition, a capability indication field further includes a HARQ process ID indication field, an NDI indication field, an RV indication field, a source ID indication field, a destination ID indication field, a CSI requirement indication field, a zone ID indication field, and the like.

In another optional embodiment, in a case that the target information is at least one of the first-stage sidelink control information, the second-stage sidelink control information, and the downlink control information, the method further includes:
indicating, by using a format of the target information, whether the first information is assistance information, where, for example, a specific SCI or DCI format is used to indicate that the first information is assistance information, and the second device determines, based on an SCI length or a DCI length, an SCI format or a DCI format, so as to determine whether the first information is assistance information.

In a case that the target information is the second-stage sidelink control information, the method further includes:
adding the first information to second-stage sidelink control information with a specific format, and indicating the format of the second-stage sidelink control information by using a fourth indication field in the first-stage sidelink control information.

The fourth indication field includes at least one of the following:
a priority indication field, a resource reservation periodicity indication field, a frequency domain resource allocation indication field, a time domain resource allocation indication field, a demodulation reference signal DMRS mode indication field, a second-stage SCI format indication field, a β offset indication field, a DMRS configuration type indication field, and a modulation and coding scheme indication field.

For example, the format of the second-stage SCI is indicated by a specific codepoint or one specific bit of "the second-stage SCI format indication field" of the first-stage SCI, so as to indirectly indicate whether the first information carried by the second-stage SCI is assistance information.

### Example 3

When a specific second-stage SCI format is used to indicate whether the first information is assistance information, indication is performed by using one codepoint in a second-stage SCI format indication field of the first-stage SCI. For example, a codepoint 11 in the second-stage SCI format indication field of the first-stage SCI is used to indicate that the second-stage SCI carries assistance information, or a codepoint 11 in the second-stage SCI format indication field of the first SCI is used to indicate the format of the second-stage SCI, and the second-stage SCI in this format carries the assistance information.

In another method, indication is performed by using one specific bit in the second-stage SCI format indication field of the first SCI, the bit being set to 0 represents that the first information carried by the second-stage SCI is non-assistance information, and the bit being set to 1 represents that the first information carried by the second SCI is assistance information. For example, if a length of the second-stage SCI format indication field of the first SCI is 3 bits, indication is performed by using a least significant bit. For example, a codepoint 111 represents that the first information carried by the second SCI is assistance information, and a codepoint 110 represents that the first information carried by the second SCI is non-assistance information.

In still another optional embodiment, in a case that the target information is at least one of the first-stage sidelink control information, the second-stage sidelink control information, and the downlink control information, the method further includes:
indicating, by using a scrambling radio network temporary identifier RNTI of the target information, whether the first information is assistance information, where the second device determines, based on whether SCI or DCI is able to be decoded based on the RNTI, whether the first information carried by the SCI or DCI is assistance information.

If the first information is assistance information, a method for generating the scrambling RNTI of the target information includes at least one of the following:
being generated by using a predefined value;
being equal to a predefined scrambling RNTI;
being equal to a scrambling RNTI configured by a higher layer;
being generated by using a resource pool ID;
being generated by using an information resource ID;
being generated by using an information target ID; and
being generated by using a group ID.

In still another optional embodiment, the method further includes:
indicating, by using a transmission resource of the first information, whether the first information is assistance information.

If the first information is assistance information, the transmission resource of the first information includes at least one of the following:
a physical sidelink feedback channel;
a physical sidelink data channel;
a resource in a dedicated resource pool;
a resource indicated in a trigger message for triggering transmission of assistance information;
a resource on a specific sub-band in a resource pool, for example, the last n sub-band resources; and
a resource on a specific symbol or specific subframe in a resource pool, for example, a resource on the last symbol of each slot; for another example, using every n slots as a period, a resource on the last slot of each period.

In another optional embodiment of this application, in a case that the first device adds the time domain resource indication information of the first information to the first-stage sidelink control information and/or the second-stage sidelink control information,
the time domain resource indication information is indicated by a fifth indication field in the first-stage sidelink control information and/or the second-stage sidelink control information, where each codepoint of the fifth indication field corresponds to at least one piece of time domain resource indication information, and the time domain resource indication information includes at least one of a time domain resource start position, a time domain resource end position, and a time domain resource length; and the fifth indication field is an independent indication field, or the fifth indication field is a jointly coded indication field;
   or,
at least one piece of time domain resource indication information is indicated by a bitmap in the first-stage sidelink control information and/or the second-stage sidelink control information, where the time domain resource indication information includes at least one of a time domain resource start position, a time domain resource end position, and a time domain resource length.

The time domain resource length may be a predefined value or a value configured by the higher layer, and may be L slots (slot), symbols (symbol), frames (frame), or subframes (sub-frame).

In an implementation, the fifth indication field may be a time domain resource allocation indication field of the first-stage SCI in the prior art, and each codepoint corresponds to start positions and end positions of one or more time domain resources.

### Example 4

The time domain resource indication information is carried in the first-stage SCI or second-stage SCI, and is indicated by an independent indication field. Each codepoint corresponds to a position and a length of one time domain resource, where the length may be a value predefined by the protocol or a value configured by the higher layer, and or may be L slots or symbols. Each codepoint corresponds to a start position and a length of one time domain resource, and the indication field has a length of N and may indicate a time domain resource position within subsequent 2N+L-1 time units starting from a current moment. If L represents 3 slots and the indication field has a length of 4 bits, a reservation status in subsequent 18 slots may be indicated.

In another manner, in the first-stage SCI or second-stage SCI, a bitmap with a length of L is used to indicate start positions of one or more time domain resources. For example, as predefined by the protocol or configured by the higher layer, a moment corresponding to a bit 1 is a start position of a time segment, where a time unit corresponding to each bit may be slot or symbol, for example, one bit may correspond to a time length of 1 or 5 slots or symbols. For example, if the bitmap has a length of 32, with one bit corresponding to a time length of 5 slots, the bitmap indicates a reservation status in subsequent 160 slots. For example, if the first bit is set to 1, it indicates subsequent 5 slots including a current slot starting from a current moment.

In still another optional embodiment of this application, in a case that the first device has time domain resource length indication information of the first information carried in the first-stage sidelink control information and/or the second-stage sidelink control information,
the time domain resource indication information is indicated by a sixth indication field in the first-stage sidelink control information and/or the second-stage sidelink control information, where each codepoint of the sixth indication field corresponds to one time domain resource length, and the sixth indication field is an independent indication field, or the sixth indication field is a jointly coded indication field. For example, if indication is performed by using an independent 2-bit indication field, there are time segment lengths corresponding to four codepoints, where special codepoints, indicate that the time segment length is infinite and 0, for example, codepoint 00 and codepoint 11.

### Example 5

When an independent indication field is used to indicate a time domain resource length, the independent indication field with a length of 2 bits correspond to four codepoints and may correspond to four different time domain resource lengths. For example, time segments corresponding to codepoints 00, 01, 10, and 11 are 1, 2, 4, and 8, respectively. When the time segment length is in a unit of slot, and an indicating codepoint in the indication field is 11, it indicates one time domain resource length of 8 slots. In addition, the time domain resource length may alternatively be in a unit of symbol (symbol).

When the time domain resource length is indicated through joint coding with another indication field, for example, indication is performed through joint coding with a priority indication field of the first-stage SCI. The existing priority indication field has a length of 3 bits, corresponding to eight codepoints. In a case that the number of bits is not increased, the eight codepoints correspond to eight priority levels, and also correspond to eight time domain resource lengths. For example, a codepoint 000 may correspond to a priority 1 and indicate one time domain resource length being 1 slot, and a codepoint 111 may correspond to a priority 8 and indicate one time domain resource length being 8 slots. If the number of bits is increased, for example, the number of bits of the priority indication field is increased to 4, corresponding to 16 codepoints, still only eight priority levels can be indicated, each priority indicates being corresponding to two codepoints. For example, a priority 8 corresponds to codepoints 1110 and 1111, where 1110 correspondingly represents a priority level being 8 and one time domain resource length being 15, and 1111 correspondingly represents a priority level being 8 and one time domain resource length being 16. In addition, an indication field for joint coding further includes a frequency domain resource allocation indication field, a time domain resource allocation indication field, a resource reservation periodicity indication field, a DMRS pattern indication field, a 2nd-stage SCI format indication field, a beta offset indication field, a DMRS port number indication field, a modulation and coding scheme indication field, as well as a HARQ process ID indication field, an NDI indication field, an RV indication field, a source ID indication field, a destination ID indication field, a CSI requirement indication field, a communication range indication field, and a zone ID indication field in the 2nd-stage SCI, and the like.

When a codepoint reserved in an existing indication field is used to indicate a time segment length, for example, the existing indication field may be a communication range indication field; and if eight codepoints are reserved, these eight codepoints may be used to correspond to eight different time domain resource lengths, for example, lengths of 1, 2, 3, 4, 5, 6, 7, and 8 slots. In addition, an indication field for joint coding further includes a frequency domain resource allocation indication field, a time domain resource allocation indication field, a resource reservation periodicity indication field, a priority indication field, a DMRS pattern indication field, a 2nd-stage SCI format indication field, a beta offset indication field, a DMRS port number indication field, a modulation and coding scheme indication field, as well as a HARQ process ID indication field, an NDI indication field, an RV indication field, a source ID indication field, a destination ID indication field, a CSI requirement indication field, and a zone ID indication field in the 2nd-stage SCI, and the like.

In still another optional embodiment, in a case that the first device adds the frequency domain resource indication information of the first information to the first-stage sidelink control information and/or the second-stage sidelink control information,
the frequency domain resource indication information is indicated by a seventh indication field in the first-stage sidelink control information and/or the second-stage sidelink control information, where each codepoint of the seventh indication field corresponds to position information of at least one frequency domain resource, and the position information of the frequency domain resource includes at least one of a frequency domain resource start position, a frequency domain resource end position, and a frequency domain resource length.

The seventh indication field is an independent indication field, or the seventh indication field is a jointly coded indication field.

In an implementation, the seventh indication field may be a frequency domain resource allocation indication field of the first-stage SCI in the prior art, and each codepoint corresponds to a start position and an end position of one or more frequency domain resources.

In another optional embodiment, in a case that the first device has time domain resource position offset information of the first information carried in the first-stage sidelink control information and/or the second-stage sidelink control information,
the time domain resource position offset information is indicated by an eighth indication field in the first-stage sidelink control information and/or the second-stage sidelink control information, where each codepoint of the eighth indication field corresponds to one time domain offset length, and the eighth indication field is an independent indication field, or the eighth indication field is a jointly coded indication field. The time domain offset length may be in a unit of slot, symbol, frame, or subframe.

The time domain resource position offset information may alternatively be a predefined value, or a value configured by using RRC by the higher layer, or a value configured by using an MAC CE.

In still another optional embodiment, in a case that the first device adds frequency domain resource position offset information of the first information to the first-stage sidelink control information and/or the second-stage sidelink control information,
the frequency domain resource position offset information is indicated by a ninth indication field in the first-stage sidelink control information and/or the second-stage sidelink control information, where each codepoint of the ninth indication field corresponds to one frequency domain offset length, and the ninth indication field is an independent indication field, or the ninth indication field is a jointly coded indication field. The frequency domain offset length may be in units of subchannel, physical resource block PRB, bandwidth portion BWP, or pool.

The frequency domain resource position offset information may alternatively be a predefined fixed value, or a value configured by using RRC by the higher layer, or a value configured by using an MAC CE.

### Example 6

The time domain resource position offset information, the frequency domain resource position offset information, and the function indication information of the first information may alternatively be indicated by an independent indication field, or indicated through joint coding with another indication field. An indication method for the time domain resource position offset information is used as an example.

When an independent indication field is used to indicate a time domain resource position offset, the independent indication field with a length of 2 bits correspond to four codepoints and may correspond to four different values. For example, offsets corresponding to codepoints 00, 01, 10, and 11 are 1 slot, 2 slots, 4 slots, and 8 slots, respectively. In addition, when an indicating codepoint in the indication field is 11, it indicates that there are 8 time domain resource position offsets.

When indication is performed through joint coding with another indication field, for example, indication is performed through joint coding with a priority indication field of the first-stage SCI. The existing priority indication field has a length of 3 bits, corresponding to eight codepoints. In a case that the number of bits is not increased, the eight codepoints correspond to eight priority levels, and also correspond to eight time domain resource position offset lengths. For example, a codepoint 000 may correspond to a priority being 1 and a time domain resource position offset being 1 slot, and a codepoint 111 may correspond to a priority being 8 and a time domain resource position offset being 8 slots. If the number of bits is increased, for example, the number of bits of the priority indication field is increased to 4, corresponding to 16 codepoints, still only eight priority levels can be indicated, and each priority indicates being corresponding to two codepoints. For example, a priority 8 corresponds to a codepoint 1110 and a codepoint 1111, where 1110 correspondingly represents a priority level being 8 and the time domain resource position offset being 15 slots, and 1111 correspondingly represents a priority level being 8 and the time domain resource position offset being 16 slots.

In addition, an indication field for joint coding further includes a frequency domain resource allocation indication field, a time domain resource allocation indication field, a resource reservation periodicity indication field, a DMRS pattern indication field, a 2nd-stage SCI format indication field, a beta offset indication field, a DMRS port number indication field, a modulation and coding scheme indication field, as well as a HARQ process ID indication field, an NDI indication field, an RV indication field, a source ID indication field, a destination ID indication field, a CSI requirement indication field, a communication range indication field, and a zone ID indication field in the 2nd-stage SCI, and the like.

In another optional embodiment, in a case that the first device adds the function indication information of the first information in the first information to the first-stage sidelink control information and/or the second-stage sidelink control information,
the function indication information is indicated by a tenth indication field in the first-stage sidelink control information and/or the second-stage sidelink control information, where each codepoint of the tenth indication field corresponds to one function of the first information, and the tenth indication field is an independent indication field, or the tenth indication field is a jointly coded indication field.

The first information includes at least one of the following functions:
indicating that the second device preferentially selects or preferentially reserves a resource indicated by the first information;
indicating that the second device non-preferentially selects or non-preferentially reserves a resource indicated by the first information;
indicating that the second device is allowed to select or reserve only a resource indicated by the first information; and
indicating that the second device is not allowed to select or reserve a resource indicated by the first information.

For example, four codepoints are needed to respectively correspond to the four functions, and a total of 2 bits are needed.

In another optional embodiment, in a case that the first device adds the applicable range indication information of the first information in the first information to the first-stage sidelink control information and/or the second-stage sidelink control information,
the applicable range indication information is indicated by an eleventh indication field in the first-stage sidelink control information and/or the second-stage sidelink control information, where each codepoint of the eleventh indication field corresponds to one applicable scope of the first information, and the eleventh indication field is an independent indication field, or the eleventh indication field is a jointly coded indication field.

An applicable scope of the first information includes at least one of the following:
indicating that the first information is applicable to a unicast transmission mode;
indicating that the first information is applicable to a groupcast transmission mode; and
indicating that the first information is applicable to a broadcast transmission mode.

For example, three codepoints are needed to respectively correspond to the four functions, and a total of 2 bits are needed.

In conclusion, in this embodiment of this application, the first device transmits, to at least one second device, the first information for assisting the second device in selecting or reserving a resource for data transmission, which can improve the transmission reliability and reduce energy consumption.

As shown in FIG. 6, an embodiment of this application further provides a resource processing method applied to a second device, and the method includes:
Step 601: Receive first information sent by a first device.
Step 602: Select or reserve, based on decoding of the first information, a resource for data transmission.

A specific application scenario of this embodiment of this application includes at least one of the following:
Scenario 1 is a unicast scenario, as shown in FIG. 2, where the first device sends first information to the second device, and the second device performs resource selection or resource reservation for data transmission based on a resource indicated by the first information.
Scenario 2 is a groupcast scenario, as shown in FIG. 3, where a plurality of first devices in a group send first information to a second device in the group, and the second device performs resource selection or resource reservation for data transmission based on a resource indicated by the first information.
Scenario 3 is a groupcast scenario, as shown in FIG. 4, where any device in a group sends first information to any other devices in the group, and a device receiving the first information performs resource selection or resource reservation for data transmission based on a resource indicated by the first information.
Scenario 4 is a scenario where a control node, a control terminal, or a roadside unit is present, as shown in FIG. 5, where the first device sends first information to the control node, the control terminal, or the roadside unit, and the control node, the control terminal, or the roadside unit performs resource allocation for the terminal based on the first information.
Scenario 5 is a broadcast scenario, where the first device (any one terminal) may send first information to the second device (any other terminals), and a device receiving the first information performs resource selection or resource reservation based on a resource indicated by the first information.

In an optional embodiment, the first information includes at least one of the following information:
time domain resource indication information, indicating a length, a start position, or an end position of one time domain resource, where one time domain resource or a plurality of time domain resources may be indicated;
frequency domain resource indication information, including at least one of a frequency domain start position, a frequency domain end position, and a frequency domain resource length;
time domain resource position offset information;
frequency domain resource position offset information;
identification information of a first-information transmit end, for identifying the first-information transmit end;
identification information of a first-information receive end, for identifying the first-information receive end, which may be a group ID, a terminal ID, or a group member ID;
type indication information of the first information, for indicating whether the first information is assistance information;
function indication information of the first information; and
applicable range indication information of the first information.

In this embodiment of this application, if the first information includes only a time domain resource position, a length corresponding to one time domain resource is a predefined value or a value configured by the higher layer; or if the first information includes a time domain resource position and a time domain resource length, the length corresponding to one time domain resource is dynamically indicated.

If the first information includes the identification information of the first-information receive end, and the identification information of the first-information receive end is a predefined ID or an ID configured by the higher layer, all corresponding terminals need to receive the first information; if the identification information of the first-information receive end is a group ID, all members corresponding to a specific group need to receive the first information; if the identification information of the first-information receive end is a group member ID, a specific member corresponding to a specific group needs to receive the first information; or if the identification information of the first-information receive end is a terminal ID, a specific corresponding user needs to receive the first information.

Optionally, in this embodiment of this application, the type indication information of the first information is used to indicate at least one of the following:
indicating that the first information is non-assistance information; and
indicating that the first information is assistance information. Optionally, the type indication information may directly indicate that the first information is dynamic assistance information, or may directly indicate that the first information is semi-static assistance information, which is not specifically limited herein.

Optionally, the first device may select whether the first information is assistance information through autonomous judgment or based on whether trigger information for triggering transmission of the assistance information is received, and the trigger information of the assistance information may be obtained from a control node or other terminals, which is not specifically limited herein.

Optionally, in this embodiment of this application, the function indication information of the first information is used to indicate at least one of the following:
indicating that the second device preferentially selects or preferentially reserves a resource indicated by the first information;
indicating that the second device non-preferentially selects or non-preferentially reserves a resource indicated by the first information;
indicating that the second device is allowed to select or reserve only a resource indicated by the first information; and
indicating that the second device is not allowed to select or reserve a resource indicated by the first information.

Optionally, in this embodiment of this application, the applicable range indication information of the first information is used to indicate at least one of the following:
indicating that the first information is applicable to a unicast transmission mode;
indicating that the first information is applicable to a groupcast transmission mode; and
indicating that the first information is applicable to a broadcast transmission mode.

Optionally, in this embodiment of this application, the first information is carried in target information, and the target information includes at least one of the following:
sidelink control information SCI;
downlink control information DCI;
radio resource control information RRC information;
direct communication link radio resource control information PC5-RRC information; and
sidelink feedback control information SFCI.

The sidelink control information SCI further includes: first-stage sidelink control information (1st stage SCI) and second-stage sidelink control information (2nd stage SCI).

In an optional embodiment, in a case that the first device adds the first information to the first-stage sidelink control information and/or the second-stage sidelink control information,
the type indication information is indicated by a first indication field in the first-stage sidelink control information and/or the second-stage sidelink control information;
   or,
the type indication information is indicated through joint coding with a second indication field in the first-stage sidelink control information and/or the second-stage sidelink control information;
   or,
the type indication information is indicated by a codepoint in a third indication field of the first-stage sidelink control information and/or the second-stage sidelink control information.

The second indication field and/or the third indication field includes at least one of the following:
a priority indication field, a resource reservation periodicity indication field, a frequency domain resource allocation indication field, a time domain resource allocation indication field, a demodulation reference signal DMRS mode indication field, a second-stage SCI format indication field, a β offset indication field, a DMRS configuration type indication field, a modulation and coding scheme indication field, a hybrid automatic repeat request HARQ process ID indication field, a new data indication NDI indication field, a redundancy version RV indication field, an information source ID indication field, an information destination ID indication field, a channel state information CSI requirement indication field, a communication range indication field, and a zone ID indication field.

In another optional embodiment, in a case that the target information is at least one of the first-stage sidelink control information, the second-stage sidelink control information, and the downlink control information, the method further includes:
determining, based on a format of the target information, whether the first information is assistance information;
   or,
determining, based on a scrambling radio network temporary identifier RNTI of the target information, whether the first information is assistance information.

In a case that the target information is the second-stage sidelink control information, the method further includes:
adding the first information to second-stage sidelink control information with a specific format, and indicating the format of the second-stage sidelink control information by using a fourth indication field in the first-stage sidelink control information.

The fourth indication field includes at least one of the following:
a priority indication field, a resource reservation periodicity indication field, a frequency domain resource allocation indication field, a time domain resource allocation indication field, a demodulation reference signal DMRS mode indication field, a second-stage SCI format indication field, a β offset indication field, a DMRS configuration type indication field, and a modulation and coding scheme indication field.

For example, the format of the second-stage SCI is indicated by a specific codepoint or one specific bit of "the second-stage SCI format indication field" of the first-stage SCI, so as to indirectly indicate whether the first information carried by the second-stage SCI is assistance information.

If the first information is assistance information, a method for generating the scrambling RNTI of the target information includes at least one of the following:
being generated by using a predefined value;
being equal to a predefined scrambling RNTI;
being equal to a scrambling RNTI configured by a higher layer;
being generated by using a resource pool ID;
being generated by using an information resource ID;
being generated by using an information target ID; and
being generated by using a group ID.

In still another optional embodiment, the method further includes:
determining, based on a transmission resource of the first information, whether the first information is assistance information.

If the first information is assistance information, the transmission resource of the first information includes at least one of the following:
a physical sidelink feedback channel;
a physical sidelink data channel;
a resource in a dedicated resource pool;
a resource indicated in a trigger message for triggering transmission of assistance information;
a resource on a specific sub-band in a resource pool, for example, the last n sub-band resources; and
a resource on a specific symbol or specific subframe in a resource pool, for example, a resource on the last symbol of each slot; for another example, using every n slots as a period, a resource on the last slot of each period.

In another optional embodiment of this application, in a case that the first device adds the time domain resource indication information of the first information to the first-stage sidelink control information and/or the second-stage sidelink control information, the method further includes:
determining the time domain resource position indication information based on a fifth indication field of the first-stage sidelink control information and/or the second-stage sidelink control information, where each codepoint of the fifth indication field corresponds to at least one piece of time domain resource indication information, and the time domain resource indication information includes at least one of a time domain resource start position, a time domain resource end position, and a time domain resource length;
   or,
determining the time domain resource indication information based on a bitmap of the first-stage sidelink control information and/or the second-stage sidelink control information, the bitmap is used to indicate at least one piece of time domain resource indication information, and the time domain resource indication information includes at least one of a time domain resource start position, a time domain resource end position, and a time domain resource length.

In still another optional embodiment of this application, in a case that the first device adds the time domain resource length indication information of the first information to the first-stage sidelink control information and/or the second-stage sidelink control information, the method further includes:
determining the time domain resource indication information based on a sixth indication field of the first-stage sidelink control information and/or the second-stage sidelink control information, where each codepoint of the sixth indication field corresponds to one time domain resource length; and
the sixth indication field is an independent indication field, or the sixth indication field is a jointly coded indication field.

For example, if indication is performed by using an independent 2-bit indication field, there are time segment lengths corresponding to four codepoints, where special codepoints indicate that the time segment lengths are infinite and 0, for example, a codepoint 00 and a codepoint 11.

In still another optional embodiment, in a case that the first device adds the frequency domain resource indication information of the first information to the first-stage sidelink control information and/or the second-stage sidelink control information, the method further includes:
determining the frequency domain resource indication information based on a seventh indication field of the first-stage sidelink control information and/or the second-stage sidelink control information, where each codepoint of the seventh indication field corresponds to a start position of at least one frequency domain resource.

In still another optional embodiment, in a case that the first device adds the time domain resource position offset information of the first information to the first-stage sidelink control information and/or the second-stage sidelink control information, the method further includes:
determining the time domain resource position offset information based on an eighth indication field in the first-stage sidelink control information and/or the second-stage sidelink control information, where each codepoint of the eighth indication field corresponds to one time domain offset length, and the eighth indication field is an independent indication field, or the eighth indication field is a jointly coded indication field. The time domain offset length may be in a unit of slot, symbol, frame, or subframe.

The time domain resource position offset information may alternatively be a predefined fixed value, or a value configured by using RRC by the higher layer, or a value configured by using an MAC CE.

In still another optional embodiment, in a case that the first device adds the frequency domain resource position offset information of the first information to the first-stage sidelink control information and/or the second-stage sidelink control information, the method further includes:
determining the frequency domain resource position offset information based on a ninth indication field in the first-stage sidelink control information and/or the second-stage sidelink control information, where each codepoint of the ninth indication field corresponds to one frequency domain offset length, and the ninth indication field is an independent indication field, or the ninth indication field is a jointly coded indication field. The frequency domain offset length may be in a unit of subchannel, physical resource block PRB, bandwidth portion BWP, or pool.

The frequency domain resource position offset information may alternatively be a predefined fixed value, or a value configured by using RRC by the higher layer, or a value configured by using an MAC CE.

In another optional embodiment, in a case that the first device adds the function indication information of the first information in the first information to the first-stage sidelink control information and/or the second-stage sidelink control information, the method further includes:
determining the function indication information based on a tenth indication field of the first-stage sidelink control information and/or the second-stage sidelink control information, where each codepoint of the tenth indication field corresponds to one function of the first information, and the tenth indication field is an independent indication field, or the tenth indication field is a jointly coded indication field. The first information includes at least one of the following functions:
indicating that the second device preferentially selects or preferentially reserves a resource indicated by the first information;
indicating that the second device non-preferentially selects or non-preferentially reserves a resource indicated by the first information;
indicating that the second device is allowed to select or reserve only a resource indicated by the first information; and
indicating that the second device is not allowed to select or reserve a resource indicated by the first information.

For example, four codepoints are needed to respectively correspond to the four functions, and a total of 2 bits are needed.

In another optional embodiment, in a case that the first device adds the applicable range indication information of the first information in the first information to the first-stage sidelink control information and/or the second-stage sidelink control information, the method further includes:
determining the applicable range indication information based on an eleventh indication field of the first-stage sidelink control information and/or the second-stage sidelink control information, where each codepoint of the eleventh indication field corresponds to one applicable scope of the first information, and the eleventh indication field is an independent indication field, or the eleventh indication field is a jointly coded indication field. An applicable scope of the first information includes at least one of the following:
indicating that the first information is applicable to a unicast transmission mode;
indicating that the first information is applicable to a groupcast transmission mode; and
indicating that the first information is applicable to a broadcast transmission mode.

For example, three codepoints are needed to respectively correspond to the four functions, and a total of 2 bits are needed.

In still another optional embodiment of this application, before step 602, the method further includes:
determining a type of the first information, where
a method for determining the type of the first information includes at least one of the following:
   determining, based on content indicated by first-information type indication information of the first information, whether the first information is assistance information;
   determining, based on a format of the first information and/or a format length of the first information, whether the first information is assistance information;
   determining, based on the scrambling RNTI of the first information, whether the first information is assistance information; and
   determining, based on a transmission resource of the first information, whether the first information is assistance information.

In still another optional embodiment of this application, step 602 includes:
if the first information is non-assistance information, excluding a resource indicated by the first information, during resource selection or reservation for data transmission;
   or,
if the first information is assistance information, using a resource indicated by the first information as a candidate resource or a reserved resource for data transmission.

In another optional embodiment of this application, step 602 includes:
if the first information is assistance information, and identification information of a first-information receive end included in the first information matches identification information of the second device, using a resource indicated by the first information as a candidate resource, or reserving the resource indicated by the first information, during resource selection or reservation for data transmission;
   or,
if the first information is assistance information, and identification information of a first-information receive end included in the first information does not match identification information of the second device, excluding a resource indicated by the first information, during resource selection or reservation for data transmission.

In another optional embodiment of this application, step 602 includes:
if the first information is assistance information, and a distance between the first-information receive end and the first-information transmit end satisfies a preset condition, using a resource indicated by the first information as a candidate resource, or reserving the resource indicated by the first information, during resource selection or reservation for data transmission;
   or,
if the first information is assistance information, and a distance between the first-information receive end and the first-information transmit end does not satisfy a preset condition, excluding the resource indicated by the first information, during resource selection or reservation for data transmission.

The preset condition may be being greater than or less than a specific distance threshold value.

In another optional embodiment of this application, step 602 includes:
if the first information is assistance information, identification information of the first-information receive end included in the first information matches identification information of the second device, and the distance between the first-information receive end and the first-information transmit end satisfies the preset condition, using a resource indicated by the first information as a candidate resource, or reserving the resource indicated by the first information, during resource selection or reservation for data transmission;
   or,
if the first information is assistance information, the identification information of the first-information receive end included in the first information does not match the identification information of the second device, and a distance between the first-information receive end and the first-information transmit end does not satisfy a preset condition, excluding the resource indicated by the first information, during resource selection or reservation for data transmission.

The preset condition may be being greater than or less than a specific distance threshold value.

In another optional embodiment of this application, step 602 includes:
in a case that the first information is assistance information,
if the function indication information of the first information indicates that the second device preferentially selects or preferentially reserves the resource indicated by the first information, preferentially selecting or preferentially reserving the resource indicated by the first information;
   or,
if the function indication information of the first information indicates that the second device non-preferentially selects or non-preferentially reserves a resource indicated by the first information, non-preferentially selecting or non-preferentially reserving the resource indicated by the first information;
   or,
if the function indication information of the first information indicates that the second device is allowed to select or reserve only the resource indicated by the first information, selecting or reserving the resource indicated by the first information;
   or,
if the function indication information of the first information indicates that the second device is not allowed to select or reserve the resource indicated by the first information, excluding the resource indicated by the first information.

In another optional embodiment of this application, step 602 includes:
in a case that the first information is assistance information,
if the applicable range indication information of the first information indicates that the first information is applicable to the unicast transmission mode, in a case that the second device is currently in unicast transmission, selecting or reserving, based on the resource indicated by the first information, a resource for data transmission;
   or,
if the applicable range indication information of the first information indicates that the first information is applicable to the groupcast transmission mode, in a case that the second device is currently in groupcast transmission, selecting or reserving, based on the resource indicated by the first information, a resource for data transmission;
   or,
if the applicable range indication information of the first information indicates that the first information is applicable to the broadcast transmission mode, in a case that the second device is currently in broadcast transmission, selecting or reserving, based on the resource indicated by the first information, a resource for data transmission.

In another optional embodiment, the resource indicated by the first information includes at least one of the following:
a time domain resource determined based on time domain resource indication information that is included in the first information;
a frequency domain resource determined based on frequency domain resource indication information that is included in the first information;
a time-frequency resource determined based on the time domain resource indication information and the frequency domain resource indication information that are included in the first information;
a time domain resource determined based on the time domain resource indication information and time domain resource position offset information that are included in the first information;
a frequency domain resource determined based on the frequency domain resource indication information and frequency domain resource position offset information that are included in the first information; and
a time-frequency resource determined based on the time domain resource indication information, the time domain resource position offset information, the frequency domain resource indication information, and the frequency domain resource position offset information that are included in the first information.

### Example 7

When received SCI includes only a time domain position indication of a resource, it indicates that a time domain length of the resource is configured or predefined, for example, the length is 2 slots. A time domain start position of the resource is obtained by using a codepoint corresponding to the indication field, for example, the codepoint corresponding to the indication field indicates that the 5th slot is the time domain start position of the resource starting from a current moment, and accordingly a time domain resource corresponding to the codepoint is the 5th slot and the 6th slot starting from the current moment.

When the SCI received by the second device includes the time domain position indication and the time domain resource length that are of the resource, the second device obtains a time domain position of the resource by using codepoints corresponding to the two indication fields. In this case, the time domain length of the resource is dynamically indicated by the time domain resource length indication field of the SCI. For example, the time domain resource length indicated by this field is 3 slots, the time domain resource start position indicated by the time domain position indication field of the resource is the 3rd slot starting from a current moment, and accordingly the time domain position of the resource may be the 3rd slot, the 4th slot, and the 5th slot starting from the current moment.

### Example 8

In the current NR V2X, resource indicated in the first-stage SCI includes a resource scheduled by the current SCI. However, if a resource indicated in the assistance information does not include the resource scheduled by the current SCI, the resource scheduled by the current SCI is wasted, which may greatly decrease a utilization rate of a system resource. Based on a current indication reservation mechanism, this problem may be resolved by using one piece of extra offset (offset) indication. For example, on a basis of a resource time and frequency position indication in the first-stage SCI, one field is additionally provided for indicating a time domain offset and frequency domain offset of an actually indicated resource relative to those indicated in current resource indication signaling.

When the SCI received by the second device includes only the time domain resource position offset indication, the time domain position of the resource needs to be obtained based on a time domain position indicated by the resource time domain indication information plus an offset indicated by the time domain resource position offset indication information.

When the SCI received by the second device includes only the frequency domain resource position offset indication, the frequency domain position of the resource needs to be obtained based on a frequency domain position indicated by the resource time domain indication information plus an offset indicated by the frequency domain resource position offset indication information.

When the SCI received by the second device includes both the time domain resource position offset indication and the frequency domain resource position offset indication, the time domain position of the resource needs to be obtained based on a time domain position indicated by the resource time domain indication information plus an offset indicated by the time domain resource position offset indication information, and the frequency domain position of the resource is obtained based on a frequency domain position indicated by the resource time domain indication information plus an offset indicated by the frequency domain resource position offset indication information.

### Example 9

In this embodiment of this application, slight modifications are made based on original resource allocation, with small changes being made on a signaling plane to implement good compatibility.

The type indication information of the first information is introduced for indicating whether the first information is assistance information;
and/or, an introduced time domain resource length indication field may be further enhanced based on original resource indication. The resource time domain indication carried in the SCI may indicate time domain position information of two or three reserved resources, and a length of each resource is one slot t by default in a protocol. After the time domain resource length indication field is introduced, a length of one time domain resource may be dynamically configured, and therefore the indication field further has enhanced effects while being compatible with an existing resource allocation mechanism;
and/or, introduced time and frequency resource position offset indication fields may effectively alleviate the waste of the indicated 1st resource, without affecting the purpose of resource indication. In this way, the utilization rate of the system resource can be improved while an original resource indication manner may be affected. Therefore, the introduced indication field can be well compatible with the existing resource allocation mechanism, increasing a resource utilization rate.

### Example 10

In a case that information received by the second device includes both a first identifier for indicating whether the information is assistance information and a second identifier for indicating whether the information is trigger information for triggering the assistance transmission, the second device performs the following different actions:
when the information received by the second device includes both the first identifier and the second identifier that are indicated in different indication fields, where when the first-identifier indication field indicates that the information is not trigger information for triggering transmission of the assistance information, and the second-identifier indication field indicates that the information is assistance information, the information may be referred to as assistance information. If a receive end ID carried in the information matches a receive end ID in the signaling, during resource reservation, the receive end of the information needs to obtain the positions of the resources through calculation by decoding related information of the resource indication in the information, and lists these resources as candidate resources or directly reserves these resources, for data transmission.

Alternatively,
when the information received by the second device includes both the first identifier and the second identifier that are indicated in different indication fields, where when the first-identifier indication field indicates that the information is not trigger information for triggering transmission of the assistance information, and the second-identifier indication field indicates that the information is assistance information, the information may be referred to as assistance information. If a receive end ID carried in the information does not match a receive end ID in the signaling, during resource selection or reservation, the receive end of the information needs to obtain the positions of the resources through calculation by decoding related information of the resource indication in the information, and excludes these resources.

Alternatively,
when the information received by the second device includes both the first identifier and the second identifier that are indicated in different indication fields, where when the first-identifier indication field indicates that the information is trigger information for triggering transmission of the assistance information, and the second-identifier indication field indicates that the information is non-assistance information, the information may be referred to as trigger information for triggering transmission of the assistance information. If a receive end ID carried in the information matches a receive end ID in the signaling, during resource reservation, the receive end of the information needs to obtain the positions of the resources through calculation by decoding related information of the resource indication in the information, and lists these resources as candidate resources or directly reserves these resources, for transmission of the assistance information.

Alternatively,
when the information received by the second device includes both the first identifier and the second identifier that are indicated in different indication fields, where when the first-identifier indication field indicates that the information is trigger information for triggering transmission of the assistance information, and the second-identifier indication field indicates that the information is non-assistance information, the information may be referred to as trigger information for triggering transmission of the assistance information. If a receive end ID carried in the information does not match a receive end ID in the signaling, during resource selection or reservation, the receive end of the information needs to obtain the positions of the resources through calculation by decoding related information of the resource indication in the information, and excludes these resources.

Alternatively,
when the information received by the second device includes both the first identifier and the second identifier that are indicated in different indication fields, where when the first-identifier indication field indicates that the information is not trigger information for triggering transmission of the assistance information, and the second-identifier indication field indicates that the information is non-assistance information, during resource selection or reservation, the receive end of the information needs to obtain the positions of the resources through calculation by decoding related information of the resource indication in the information, and excludes these resources.

Alternatively,
the information received by the second device includes both the first identifier and the second identifier that are indicated in the same indication field. When this indication field indicates that the information is assistance information, the information may be referred to as assistance information. If a receive end ID carried in the information matches a receive end ID in the signaling, during resource reservation, the receive end of the information needs to obtain the positions of the resources through calculation by decoding related information of the resource indication in the information, and lists these resources as candidate resources or directly reserves these resources, for data transmission.

Alternatively,
the information received by the second device includes both the first identifier and the second identifier that are indicated in the same indication field. When this indication field indicates that the information is assistance information, the information may be referred to as assistance information. If a receive end ID carried in the information does not match a receive end ID in the signaling, during resource selection or reservation, the receive end of the information needs to obtain the positions of the resources through calculation by decoding related information of the resource indication in the information, and excludes these resources.

Alternatively,
the information received by the second device includes both the first identifier and the second identifier that are indicated in the same indication field. When this indication field indicates that the information is trigger information for triggering transmission of the assistance information, the information may be referred to as trigger information for triggering transmission of the assistance information. If a receive end ID carried in the information matches a receive end ID in the signaling, during resource reservation, the receive end of the information needs to obtain the positions of the resources through calculation by decoding related information of the resource indication in the information, and lists these resources as candidate resources or directly reserves these resources, for transmission of assistance information of a user.

Alternatively,
the information received by the second device includes both the first identifier and the second identifier that are indicated in the same indication field. When this indication field indicates that the information is trigger information for triggering transmission of the assistance information, the information may be referred to as trigger information for triggering transmission of the assistance information. If a receive end ID carried in the information does not match a receive end ID in the signaling, during resource selection or reservation, the receive end of the information needs to obtain the positions of the resources through calculation by decoding related information of the resource indication in the information, and excludes these resources.

Alternatively,
the information received by the second device includes both the first identifier and the second identifier that are indicated in the same indication field. When this indication field indicates that the information is non-assistance information and also is not trigger information for triggering transmission of the assistance information, during resource selection or reservation, the receive end of the information needs to obtain the positions of the resources through calculation by decoding related information of the resource indication in the information, and excludes these resources.

In conclusion, in this embodiment of this application, the first device transmits, to at least one second device, the first information for assisting the second device in selecting or reserving a resource for data transmission, and small changes are made to the original resource allocation scheme and the signaling level, therefore good compatibility is achieved, demodulation complexity of the second device can be reduced, and costs of the system may be lowered.

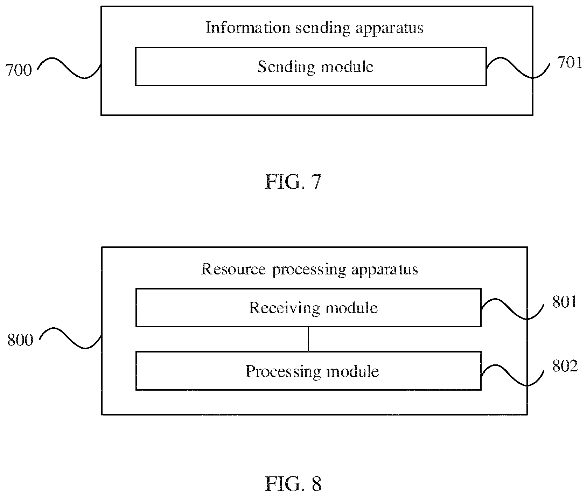

As shown in FIG. 7, an embodiment of this application further provides an information sending apparatus 700, applied to a first device and including:
a sending module 701, configured to send first information to at least one second device, where the first information is used to assist the second device in selecting or reserving a resource for data transmission.

Optionally, in the foregoing embodiment of this application, the first information includes at least one of the following information:
time domain resource indication information;
frequency domain resource indication information;
time domain resource position offset information;
frequency domain resource position offset information;
identification information of a first-information transmit end;
identification information of a first-information receive end;
type indication information of the first information;
function indication information of the first information; and
applicable range indication information of the first information.

Optionally, in the foregoing embodiment of this application, the first information is carried in target information, and the target information includes at least one of the following:
sidelink control information;
downlink control information;
radio resource control information;
direct communication link radio resource control information; and
sidelink feedback control information; where
the sidelink control information further includes: first-stage sidelink control information and second-stage sidelink control information.

Optionally, in the foregoing embodiment of this application, the function indication information of the first information is used to indicate at least one of the following:
indicating that the second device preferentially selects or preferentially reserves a resource indicated by the first information;
indicating that the second device non-preferentially selects or non-preferentially reserves a resource indicated by the first information;
indicating that the second device is allowed to select or reserve only a resource indicated by the first information; and
indicating that the second device is not allowed to select or reserve a resource indicated by the first information.

Optionally, in the foregoing embodiment of this application, the applicable range indication information of the first information is used to indicate at least one of the following:
indicating that the first information is applicable to a unicast transmission mode;
indicating that the first information is applicable to a groupcast transmission mode; and
indicating that the first information is applicable to a broadcast transmission mode.

Optionally, in the foregoing embodiment of this application, the type indication information of the first information is used to indicate at least one of the following:
indicating that the first information is non-assistance information; and
indicating that the first information is assistance information.

Optionally, in the foregoing embodiment of this application, in a case that the first device adds the first information to the first-stage sidelink control information and/or the second-stage sidelink control information:
the type indication information is indicated by a first indication field in the first-stage sidelink control information and/or the second-stage sidelink control information;
   or,
the type indication information is indicated through joint coding with a second indication field in the first-stage sidelink control information and/or the second-stage sidelink control information;
   or,
the type indication information is indicated by a codepoint in a third indication field of the first-stage sidelink control information and/or the second-stage sidelink control information.

Optionally, in the foregoing embodiment of this application, the second indication field and/or the third indication field includes at least one of the following:
a priority indication field, a resource reservation periodicity indication field, a frequency domain resource allocation indication field, a time domain resource allocation indication field, a demodulation reference signal DMRS mode indication field, a second-stage SCI format indication field, a β offset indication field, a DMRS configuration type indication field, a modulation and coding scheme indication field, a hybrid automatic repeat request HARQ process ID indication field, a new data indication NDI indication field, a redundancy version RV indication field, an information source ID indication field, an information destination ID indication field, a channel state information CSI requirement indication field, a communication range indication field, and a zone ID indication field.

Optionally, in the foregoing embodiment of this application, in a case that the target information is at least one of the first-stage sidelink control information, the second-stage sidelink control information, and the downlink control information, the apparatus further includes:
a first indication module, configured to indicate, by using a format of the target information, whether the first information is assistance information; or
indicating, by using a scrambling radio network temporary identifier RNTI of the target information, whether the first information is assistance information.

Optionally, in the foregoing embodiment of this application, in a case that the target information is the second-stage sidelink control information, the first information is added to second-stage sidelink control information with a specific format, and the apparatus further includes:
a second indication module, configured to indicate the format of the second-stage sidelink control information by using a fourth indication field in the first-stage sidelink control information.

The fourth indication field includes at least one of the following:
a priority indication field, a resource reservation periodicity indication field, a frequency domain resource allocation indication field, a time domain resource allocation indication field, a demodulation reference signal DMRS mode indication field, a second-stage SCI format indication field, a β offset indication field, a DMRS configuration type indication field, and a modulation and coding scheme indication field.

Optionally, in the foregoing embodiment of this application, if the first information is assistance information, a method for generating the scrambling RNTI of the target information includes at least one of the following:
being generated by using a predefined value;
being equal to a predefined scrambling RNTI;
being equal to a scrambling RNTI configured by a higher layer;
being generated by using a resource pool ID;
being generated by using an information resource ID;
being generated by using an information target ID; and
being generated by using a group ID.

Optionally, in the foregoing embodiment of this application, the apparatus further includes:
a third indication module, configured to indicate, by using a transmission resource of the first information, whether the first information is assistance information.

Optionally, in the foregoing embodiment of this application, if the first information is assistance information, the transmission resource of the first information includes at least one of the following:
a physical sidelink feedback channel;
a physical sidelink data channel;
a resource in a dedicated resource pool;
a resource indicated in a trigger message for triggering transmission of assistance information;
a resource on a specific sub-band in a resource pool; and
a resource on a specific symbol or specific subframe in a resource pool.

Optionally, in the foregoing embodiment of this application, in a case that the first device adds the time domain resource indication information of the first information to the first-stage sidelink control information and/or the second-stage sidelink control information:
the time domain resource indication information is indicated by a fifth indication field in the first-stage sidelink control information and/or the second-stage sidelink control information, where each codepoint of the fifth indication field corresponds to at least one piece of time domain resource indication information, and the time domain resource indication information includes at least one of a time domain resource start position, a time domain resource end position, and a time domain resource length.

The fifth indication field is an independent indication field, or the fifth indication field is a jointly coded indication field;
or,
at least one piece of time domain resource indication information is indicated by a bitmap in the first-stage sidelink control information and/or the second-stage sidelink control information, where the time domain resource indication information includes at least one of a time domain resource start position, a time domain resource end position, and a time domain resource length.

Optionally, in the foregoing embodiment of this application, in a case that the first device has time domain resource length indication information of the first information carried in the first-stage sidelink control information and/or the second-stage sidelink control information:
the time domain resource indication information is indicated by a sixth indication field in the first-stage sidelink control information and/or the second-stage sidelink control information, where each codepoint of the sixth indication field corresponds to one time domain resource length.

The sixth indication field is an independent indication field, or the sixth indication field is a jointly coded indication field.

Optionally, in the foregoing embodiment of this application, in a case that the first device adds the frequency domain resource indication information of the first information to the first-stage sidelink control information and/or the second-stage sidelink control information:
the frequency domain resource indication information is indicated by a seventh indication field in the first-stage sidelink control information and/or the second-stage sidelink control information, where each codepoint of the seventh indication field corresponds to position information of at least one frequency domain resource, and the position information of the frequency domain resource includes at least one of a frequency domain resource start position, a frequency domain resource end position, and a frequency domain resource length.

The seventh indication field is an independent indication field, or the seventh indication field is a jointly coded indication field.

Optionally, in the foregoing embodiment of this application, in a case that the first device adds the time domain resource position offset information of the first information to the first-stage sidelink control information and/or the second-stage sidelink control information:
the time domain resource position offset information is indicated by an eighth indication field in the first-stage sidelink control information and/or the second-stage sidelink control information, where each codepoint of the eighth indication field corresponds to one time domain offset length, and the eighth indication field is an independent indication field, or the eighth indication field is a jointly coded indication field.

Optionally, in the foregoing embodiment of this application, in a case that the first device adds the frequency domain resource position offset information of the first information to the first-stage sidelink control information and/or the second-stage sidelink control information:
the frequency domain resource position offset information is indicated by a ninth indication field in the first-stage sidelink control information and/or the second-stage sidelink control information, where each codepoint of the ninth indication field corresponds to one frequency domain offset length, and the ninth indication field is an independent indication field, or the ninth indication field is a jointly coded indication field.

Optionally, in the foregoing embodiment of this application, in a case that the first device adds the function indication information of the first information in the first information to the first-stage sidelink control information and/or the second-stage sidelink control information:
the function indication information is indicated by a tenth indication field in the first-stage sidelink control information and/or the second-stage sidelink control information, where each codepoint of the tenth indication field corresponds to one function of the first information, and the tenth indication field is an independent indication field, or the tenth indication field is a jointly coded indication field.

Optionally, in the foregoing embodiment of this application, in a case that the first device adds the applicable range indication information of the first information in the first information to the first-stage sidelink control information and/or the second-stage sidelink control information:
the applicable range indication information is indicated by an eleventh indication field in the first-stage sidelink control information and/or the second-stage sidelink control information, where each codepoint of the eleventh indication field corresponds to one application scope of the first information, and the eleventh indication field is an independent indication field, or the eleventh indication field is a jointly coded indication field.

In this embodiment of this application, the first device transmits, to at least one second device, the first information for assisting the second device in selecting or reserving a resource for data transmission, and small changes are made to the original resource allocation scheme and the signaling level, therefore good compatibility is achieved, demodulation complexity of the second device can be reduced, and costs of the system may be lowered.

The information sending apparatus provided in this embodiment of this application is capable of implementing the processes implemented by the information sending apparatus in the method embodiments in FIG. 1 to FIG. 5. To avoid repetition, details are not described herein again.

Optionally, an embodiment of this application further provides an electronic device, including a processor, a memory, and a program or an instruction stored in the memory and capable of running on the processor. When the program or the instruction is executed by the processor, the processes of the foregoing embodiment of the information sending method are implemented, with the same technical effects achieved. To avoid repetition, details are not described herein again.

It should be noted that the electronic device in this embodiment of this application includes the aforementioned mobile electronic device and non-mobile electronic device.

As shown in FIG. 8, an embodiment of this application further provides a resource processing apparatus 800, applied to a second device. The apparatus includes:
a receiving module 801, configured to receive first information sent by a first device; and
a processing module 802, configured to: based on decoding of the first information, select or reserve a resource for data transmission.

Optionally, in the foregoing embodiment of this application, the first information includes at least one of the following information:
time domain resource indication information;
frequency domain resource indication information;
time domain resource position offset information;
frequency domain resource position offset information;
identification information of a first-information transmit end;
identification information of a first-information receive end;
type indication information of the first information;
function indication information of the first information; and
applicable range indication information of the first information.

Optionally, in the foregoing embodiment of this application, the first information is carried in target information, and the target information includes at least one of the following:
sidelink control information;
downlink control information;
radio resource control information;
direct communication link radio resource control information; and
sidelink feedback control information.

The sidelink control information further includes: first-stage sidelink control information and second-stage sidelink control information.

Optionally, in the foregoing embodiment of this application, the function indication information of the first information is used to indicate at least one of the following:
indicating that the second device preferentially selects or preferentially reserves a resource indicated by the first information;
indicating that the second device non-preferentially selects or non-preferentially reserves a resource indicated by the first information;
indicating that the second device is allowed to select or reserve only a resource indicated by the first information; and
indicating that the second device is not allowed to select or reserve a resource indicated by the first information.

Optionally, in the foregoing embodiment of this application, the applicable range indication information of the first information is used to indicate at least one of the following:
indicating that the first information is applicable to a unicast transmission mode;
indicating that the first information is applicable to a groupcast transmission mode; and
indicating that the first information is applicable to a broadcast transmission mode.

Optionally, in the foregoing embodiment of this application, the type indication information of the first information is used to indicate at least one of the following:
indicating that the first information is non-assistance information; and
indicating that the first information is assistance information.

Optionally, in the foregoing embodiment of this application, the apparatus further includes:
a type determining module, configured to determine a type of the first information; where
a method for determining the type of the first information includes at least one of the following:
   determining, based on content indicated by first-information type indication information of the first information, whether the first information is assistance information;
   determining, based on a format of the first information and/or a format length of the first information, whether the first information is assistance information;
   determining, based on a scrambling RNTI of the first information, whether the first information is assistance information; and
   determining, based on a transmission resource of the first information, whether the first information is assistance information. Optionally, in the foregoing embodiment of this application, the processing module includes:
      a first processing submodule, configured to: if the first information is non-assistance information, exclude a resource indicated by the first information, during resource selection or reservation for data transmission;
         and/or,
      a second processing submodule, configured to: if the first information is assistance information, use a resource indicated by the first information as a candidate resource for data transmission, or reserve a resource indicated by the first information.

In another optional embodiment of this application, the processing module includes:
a sixth processing submodule, configured to: if the first information is assistance information, and a distance between the first-information receive end and the first-information transmit end satisfies a preset condition, use a resource indicated by the first information as a candidate resource or reserve a resource indicated by the first information, during resource selection or reservation for data transmission; or
if the first information is assistance information, and a distance between the first-information receive end and the first-information transmit end does not satisfy a preset condition, exclude a resource indicated by the first information, during resource selection or reservation for data transmission.

The preset condition may be being greater than or less than a specific distance threshold value.

In another optional embodiment of this application, the processing module includes:
a seventh processing submodule, configured to: if the first information is assistance information, the identification information of the first-information receive end included in the first information matches identification information of the second device, and a distance between the first-information receive end and the first-information transmit end satisfies a preset condition, use a resource indicated by the first information as a candidate resource or reserve a resource indicated by the first information, during resource selection or reservation for data transmission; or
configured to: if the first information is assistance information, the identification information of the first-information receive end included in the first information does not match identification information of the second device, and a distance between the first-information receive end and the first-information transmit end does not satisfy a preset condition, exclude a resource indicated by the first information, during resource selection or reservation for data transmission.

The preset condition may be being greater than or less than a specific distance threshold value.

Optionally, in the foregoing embodiment of this application, the processing module includes:
a third processing submodule, configured to: if the first information is assistance information, and identification information of the first-information receive end included in the first information matches identification information of the second device, use a resource indicated by the first information as a candidate resource or reserve a resource indicated by the first information, during resource selection or reservation for data transmission;
   and/or,
a fourth processing submodule, configured to: if the first information is assistance information, and identification information of the first-information receive end included in the first information does not match identification information of the second device, exclude a resource indicated by the first information, during resource selection or reservation for data transmission.

Optionally, in the foregoing embodiment of this application, the processing module includes:
a fifth processing submodule, configured to: in a case that the first information is assistance information,
if the function indication information of the first information indicates that the second device preferentially selects or preferentially reserves the resource indicated by the first information, preferentially selecting or preferentially reserving the resource indicated by the first information;
   or,
if the function indication information of the first information indicates that the second device non-preferentially selects or non-preferentially reserves the resource indicated by the first information, non-preferentially selecting or non-preferentially reserving the resource indicated by the first information;
   or,
if the function indication information of the first information indicates that the second device is allowed to select or reserve only the resource indicated by the first information, selecting or reserving the resource indicated by the first information;
   or,
if the function indication information of the first information indicates that the second device is not allowed to select or reserve the resource indicated by the first information, excluding the resource indicated by the first information.

Optionally, in the foregoing embodiment of this application, the processing module includes:
a sixth processing submodule, configured to: in a case that the first information is assistance information,
if the applicable range indication information of the first information indicates that the first information is applicable to the unicast transmission mode, in a case that the second device is currently in unicast transmission, select or reserve, based on the resource indicated by the first information, a resource for data transmission;
   or,
if the applicable range indication information of the first information indicates that the first information is applicable to the groupcast transmission mode, in a case that the second device is currently in groupcast transmission, select or reserve, based on the resource indicated by the first information, a resource for data transmission;
   or,
if the applicable range indication information of the first information indicates that the first information is applicable to the broadcast transmission mode, in a case that the second device is currently in broadcast transmission, select or reserve, based on the resource indicated by the first information, a resource for data transmission.

Optionally, in the foregoing embodiment of this application, the resource indicated by the first information includes at least one of the following:
a time domain resource determined based on time domain resource indication information that is included in the first information;
a frequency domain resource determined based on frequency domain resource indication information that is included in the first information;
a time-frequency resource determined based on the time domain resource indication information and the frequency domain resource indication information that are included in the first information;
a time domain resource determined based on the time domain resource indication information and time domain resource position offset information that are included in the first information;
a frequency domain resource determined based on the frequency domain resource indication information and frequency domain resource position offset information that are included in the first information; and
a time-frequency resource determined based on the time domain resource indication information, the time domain resource position offset information, the frequency domain resource indication information, and the frequency domain resource position offset information that are included in the first information.

In this embodiment of this application, the first device transmits, to at least one second device, the first information for assisting the second device in selecting or reserving a resource for data transmission, and small changes are made to the original resource allocation scheme and the signaling level, therefore good compatibility is achieved, demodulation complexity of the second device can be reduced, and costs of the system may be lowered.

The resource processing apparatus provided in this embodiment of this application is capable of implementing the processes implemented by the resource processing apparatus in the method embodiments in FIG. 2 to FIG. 5. To avoid repetition, details are not described herein again.

Optionally, an embodiment of this application further provides an electronic device, including a processor, a memory, and a program or an instruction stored in the memory and capable of running on the processor. When the program or the instruction is executed by the processor, the processes of the foregoing embodiment of the resource processing method are implemented, with the same technical effects achieved. To avoid repetition, details are not described herein again.

It should be noted that the electronic device in this embodiment of this application includes the aforementioned mobile electronic device and non-mobile electronic device.

The information sending apparatus and/or the resource processing apparatus in the embodiments of this application may be an apparatus, or may be a component, an integrated circuit, or a chip in a terminal. The apparatus may be a mobile electronic device or a non-mobile electronic device. For example, the mobile electronic device may be a mobile phone, a tablet computer, a notebook computer, a palmtop computer, an in-vehicle electronic device, a wearable device, an ultra-mobile personal computer (ultra-mobile personal computer, UMPC), a netbook, a personal digital assistant (personal digital assistant, PDA), or the like. The non-mobile electronic device may be a server, a network-attached storage (Network Attached Storage, NAS), a personal computer (personal computer, PC), a television (television, TV), a teller machine, a self-service machine, or the like. This is not specifically limited in the embodiments of this application.

The information sending apparatus and/or the resource processing apparatus in the embodiments of this application may be an apparatus having an operating system. The operating system may be an Android (Android) operating system, an iOS operating system, or other possible operating systems, which is not specifically limited in the embodiments of this application.

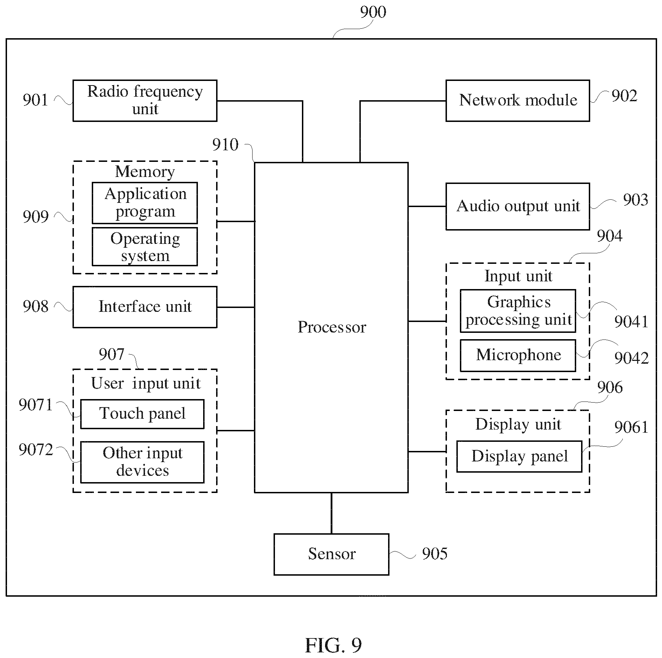

FIG. 9 is a schematic diagram of a hardware structure of an electronic device (a first device or a second device) for implementing the embodiments of this application.

The electronic device 900 includes but is not limited to components such as a radio frequency unit 901, a network module 902, an audio output unit 903, an input unit 904, a sensor 905, a display unit 906, a user input unit 907, an interface unit 908, a memory 909, and a processor 910.

A person skilled in the art can understand that the electronic device 900 may further include a power supply (for example, a battery) supplying power to all components, and the power supply may be logically connected to the processor 910 through a power management system. In this way, functions such as charge management, discharge management, and power consumption management are implemented by using the power management system. The structure of the electronic device shown in FIG. 9 does not constitute any limitation on the electronic device. The electronic device may include more or fewer components than those shown in the figure, or a combination of some components, or the components disposed differently. Details are not repeated herein.

The radio frequency unit 901 is configured to send first information to at least one second device, where the first information is used to assist the second device in selecting or reserving a resource for data transmission;

Alternatively,
the radio frequency unit 901 is configured to receive first information sent by a first device; and the processor 910 is configured to select or reserve, based on decoding of the first information, a resource for data transmission.

In this embodiment of this application, the first device transmits, to at least one second device, the first information for assisting the second device in selecting or reserving a resource for data transmission, and small changes are made to the original resource allocation scheme and the signaling level, therefore good compatibility is achieved, demodulation complexity of the second device can be reduced, and costs of the system may be lowered.

It should be understood that in this embodiment of this application, the radio frequency unit 901 may be configured to receive and send information, or to receive and send a signal in a call process, and specially, after receiving downlink data from a base station, send the downlink data to the processor 910 for processing; and also send uplink data to the base station. Generally, the radio frequency unit 901 includes but is not limited to an antenna, at least one amplifier, a transceiver, a coupler, a low noise amplifier, a duplexer, and the like. In addition, the radio frequency unit 901 may also communicate with a network and other devices via a wireless communications system.

The electronic device provides a user with wireless broadband internet access through the network module 902, for example, helping the user to transmit and receive e-mails, browse web pages, and access streaming media.

The audio output unit 903 may convert audio data received by the radio frequency unit 901 or the network module 902 or stored in the memory 909 into an audio signal and output the audio signal as a sound. Furthermore, the audio output unit 903 may also provide audio output (for example, a call signal received sound or a message received sound) related to a specific function performed by the electronic device 900. The audio output unit 903 includes a speaker, a buzzer, a receiver, and the like.

The input unit 904 is configured to receive an audio or video signal. The input unit 904 may include a graphics processing unit (Graphics Processing Unit, GPU) 9041 and a microphone 9042. The graphics processing unit 9041 processes image data of a still picture or a video obtained by an image capture apparatus (for example, a camera) in an image capture mode or a video capture mode. A processed image frame may be displayed on the display unit 906. The image frame processed by the graphics processing unit 9041 may be stored in the memory 909 (or another storage medium) or be transmitted by the radio frequency unit 901 or the network module 902. The microphone 9042 is capable of receiving sounds and processing such sounds into audio data. The processed audio data may be converted in a telephone call mode into a format that can be transmitted by the radio frequency unit 901 to a mobile communications base station, for outputting.

The electronic device 900 may further include at least one sensor 905, for example, an optical sensor, a motion sensor, and other sensors. Specifically, the optical sensor may include an ambient light sensor and a proximity sensor. The ambient light sensor may adjust luminance of the display panel 9061 based on brightness of ambient light, and the proximity sensor may turn off the display panel 9061 and/or backlight when the electronic device 900 moves close to an ear. As a type of motion sensor, an accelerometer sensor can detect magnitudes of accelerations in all directions (usually three axes), can detect a magnitude and a direction of gravity when the electronic device is in a static state, and can be applied to posture recognition (such as screen switching between portrait and landscape, related games, and magnetometer posture calibration) of the electronic device, functions related to vibration recognition (such as pedometer and tapping), and the like. The sensor 905 may also include a fingerprint sensor, a pressure sensor, an iris sensor, a molecular sensor, a gyroscope, a barometer, a hygrometer, a thermometer, an infrared sensor, and the like. Details are not described herein.

The display unit 906 is configured to display information input by the user or information provided to the user. The display unit 906 may include a display panel 9061, and the display panel 9061 may be configured in a form of a liquid crystal display (Liquid Crystal Display, LCD), an organic light-emitting diode (Organic Light-Emitting Diode, OLED), or the like.

The user input unit 907 may be configured to receive input digit or character information and generate key signal input related to user setting and function control of the user equipment. Specifically, the user input unit 907 may include a touch panel 9071 and other input devices 9072. The touch panel 9071 is also referred to as a touchscreen and can collect a touch operation (such as an operation performed by the user on the touch panel 9071 or near the touch panel 9071 with a finger or by using any proper object or accessory such as a stylus) of the user on or near the touch panel 9071. The touch panel 9071 may include two parts: a touch detection apparatus and a touch controller. The touch detection apparatus detects a touch azimuth of a user, detects a signal brought by a touch operation, and transmits the signal to the touch controller. The touch controller receives touch information from the touch detection apparatus, converts the touch information into touchpoint coordinates, and transmits the touchpoint coordinates to the processor 910, and can receive a command transmitted by the processor 910 and execute the command. In addition, the touch panel 9071 may be implemented in a plurality of forms, for example, a resistive, capacitive, infrared, or surface acoustic wave touch panel. The user input unit 907 may further include the other input devices 9072 in addition to the touch panel 9071. Specifically, the other input devices 9072 may include but are not limited to a physical keyboard, a function key (such as a volume control key or a switch key), a trackball, a mouse, and a joystick. Details are not described herein.

Further, the touch panel 9071 may cover the display panel 9061. When detecting a touch operation on or near the touch panel 9071, the touch panel 9071 transmits the touch operation to the processor 910 to determine a type of a touch event. Then, the processor 910 provides a corresponding visual output on the display panel 9061 based on the type of the touch event. Although in FIG. 9, the touch panel 9071 and the display panel 9061 act as two independent parts to implement input and output functions of the electronic device, in some embodiments, the touch panel 9071 and the display panel 9061 may be integrated to implement the input and output functions of the electronic device. This is not specifically limited herein.

The interface unit 908 is an interface between an external apparatus and the electronic device 900. For example, the external apparatus may include a wired or wireless headphone port, an external power (or battery charger) port, a wired or wireless data port, a memory card port, a port for connecting an apparatus provided with a recognition module, an audio input/output (I/O) port, a video I/O port, an earphone port, and the like. The interface unit 908 may be configured to: receive input (for example, data information and power) from the external apparatus, and transmit the received input to one or more elements in the electronic device 900, or may be configured to transmit data between the electronic device 900 and the external apparatus.

The memory 909 may be configured to store software programs and various data. The memory 909 may mainly include a program storage area and a data storage area. The program storage area may store an operating system, and an application program required by at least one function (for example, a sound playback function or an image playback function). The data storage area may store data (for example, audio data or a phone book) created according to use of the mobile phone. In addition, the memory 909 may include a high-speed random access memory, and may further include a non-volatile memory such as a disk storage device, a flash memory device, or another volatile solid-state storage device.

The processor 910 is a control center of the electronic device, and is connected to all components of the electronic device by using various interfaces and lines. By running or executing a software program and/or module that is stored in the memory 909 and calling data stored in the memory 909, the processor 910 executes various functions of the electronic device and processes data, so as to perform overall monitoring on the electronic device. The processor 910 may include one or more processing units. Preferably, an application processor and a modem processor may be integrated in the processor 910. The application processor primarily processes an operating system, user interfaces, application programs, and the like. The modem processor primarily processes radio communication. It can be understood that the modem processor may alternatively be not integrated in the processor 910.

The electronic device 900 may further include the power supply (such as a battery) for supplying power to the components. Preferably, the power supply may be logically connected to the processor 910 through a power management system. In this way, functions such as charge management, discharge management, and power consumption management are implemented by using the power management system.

In addition, the electronic device 900 includes some functional modules that are not shown, details of which are not described herein.

An embodiment of this application further provides a readable storage medium, where a program or an instruction is stored in the readable storage medium. When the program or the instruction is executed by a processor, the processes of the foregoing embodiments of the information sending method or the resource processing method are implemented, with the same technical effects achieved. To avoid repetition, details are not described herein again.

The processor is a processor in the electronic device described in the foregoing embodiments. The readable storage medium includes a computer-readable storage medium, for example, a computer read-only memory (Read-Only Memory, ROM), a random access memory (Random Access Memory, RAM), a magnetic disk, or an optical disc.

An embodiment of this application further provides a chip, where the chip includes a processor and a communications interface, the communications interface is coupled to the processor, and the processor is configured to run a program or an instruction to implement the processes of the foregoing embodiments of the information sending method or the resource processing method, with the same technical effects achieved. To avoid repetition, details are not repeated herein.

It should be understood that the chip mentioned in the embodiments of this application may also be referred to as a system-level chip, a system chip, a chip system, a system-on-chip, or the like.

It may be understood that the embodiments described in this disclosure may be implemented by hardware, software, firmware, middleware, microcode, or a combination thereof. For hardware implementation, a module, a unit, a submodule, a subunit, and the like may be implemented in one or more application specific integrated circuits (Application Specific Integrated Circuit, ASIC), digital signal processors (Digital Signal Processor, DSP), digital signal processing devices (DSP Device, DSPD), programmable logic devices (Programmable Logic Device, PLD), field-programmable gate arrays (Field-Programmable Gate Array, FPGA), general-purpose processors, controllers, microcontrollers, microprocessors, and other electronic units for performing the functions described in this application, or a combination thereof.

It should be noted that the terms "include", "comprise", or any of their variants are intended to cover a non-exclusive inclusion, such that a process, a method, an article, or an apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. In addition, it should be noted that the scope of the method and the apparatus in the embodiments of this application is not limited to executing the functions in an order shown or discussed, but may also include executing the functions in a substantially simultaneous manner or in a reverse order, depending on the functions involved. For example, the described methods may be performed in an order different from that described, and steps may alternatively be added, omitted, or combined. In addition, features described with reference to some examples may be combined in other examples.

According to the foregoing description of the implementations, a person skilled in the art may clearly understand that the methods in the foregoing embodiments may be implemented by using software in combination with a necessary common hardware platform, and certainly may alternatively be implemented by using hardware. However, in most cases, the former is a preferred implementation. Based on such an understanding, the technical solutions of this application essentially or the part contributing to the prior art may be implemented in a form of a software product. The software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other manners without departing from principles of this application and the protection scope of the claims, and all such manners fall within the protection scope of this application.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An information sending method, applied to a first device and comprising:
sending first information to at least one second device, wherein the first information is used to assist the second device in selecting or reserving a resource for data transmission.

2. The method according to claim 1, wherein the first information comprises at least one of the following information:
time domain resource indication information;
frequency domain resource indication information;
time domain resource position offset information;
frequency domain resource position offset information;
identification information of a first-information transmit end;
identification information of a first-information receive end;
type indication information of the first information;
function indication information of the first information; and
applicable range indication information of the first information.

3. The method according to claim 1, wherein the first information is carried in target information, and the target information comprises at least one of the following:
sidelink control information;
downlink control information;
radio resource control information;
direct communication link radio resource control information; and
sidelink feedback control information; wherein
the sidelink control information further comprises: first-stage sidelink control information and second-stage sidelink control information.

4. The method according to claim 2, wherein the function indication information of the first information is used to indicate at least one of the following:
indicating that the second device preferentially selects or preferentially reserves a resource indicated by the first information;
indicating that the second device non-preferentially selects or non-preferentially reserves a resource indicated by the first information;
indicating that the second device is allowed to select or reserve only a resource indicated by the first information; and
indicating that the second device is not allowed to select or reserve a resource indicated by the first information.

5. The method according to claim 2, wherein the applicable range indication information of the first information is used to indicate at least one of the following:
indicating that the first information is applicable to a unicast transmission mode;
indicating that the first information is applicable to a groupcast transmission mode; and
indicating that the first information is applicable to a broadcast transmission mode.

6. The method according to claim 2, wherein the type indication information of the first information is used to indicate at least one of the following:
indicating that the first information is non-assistance information; and
indicating that the first information is assistance information.

7. The method according to claim 2 or 3, in a case that the first device adds the first information to the first-stage sidelink control information and/or the second-stage sidelink control information:
the type indication information is indicated by a first indication field in the first-stage sidelink control information and/or the second-stage sidelink control information;
or,
the type indication information is indicated through joint coding with a second indication field in the first-stage sidelink control information and/or the second-stage sidelink control information;
or,
the type indication information is indicated by a codepoint in a third indication field of the first-stage sidelink control information and/or the second-stage sidelink control information.

8. The method according to claim 7, wherein the second indication field and/or the third indication field comprises at least one of the following:
a priority indication field, a resource reservation periodicity indication field, a frequency domain resource allocation indication field, a time domain resource allocation indication field, a demodulation reference signal DMRS mode indication field, a second-stage SCI format indication field, a β offset indication field, a DMRS configuration type indication field, a modulation and coding scheme indication field, a hybrid automatic repeat request HARQ process ID indication field, a new data indication NDI indication field, a redundancy version RV indication field, an information source ID indication field, an information destination ID indication field, a channel state information CSI requirement indication field, a communication range indication field, and a zone ID indication field.

9. The method according to claim 3, wherein in a case that the target information is at least one of the first-stage sidelink control information, the second-stage sidelink control information, and the downlink control information, the method further comprises:
indicating, by using a format of the target information, whether the first information is assistance information;
or,
indicating, by using a scrambling radio network temporary identifier RNTI of the target information, whether the first information is assistance information.

10. The method according to claim 9, wherein in a case that the target information is the second-stage sidelink control information, the method further comprises:
adding the first information to second-stage sidelink control information with a specific format, and indicating the format of the second-stage sidelink control information by using a fourth indication field in the first-stage sidelink control information; wherein
the fourth indication field comprises at least one of the following:
a priority indication field, a resource reservation periodicity indication field, a frequency domain resource allocation indication field, a time domain resource allocation indication field, a demodulation reference signal DMRS mode indication field, a second-stage SCI format indication field, a β offset indication field, a DMRS configuration type indication field, and a modulation and coding scheme indication field.

11. The method according to claim 9, wherein if the first information is assistance information, a method for generating the scrambling RNTI of the target information comprises at least one of the following:
being generated by using a predefined value;
being equal to a predefined scrambling RNTI;
being equal to a scrambling RNTI configured by a higher layer;
being generated by using a resource pool ID;
being generated by using an information resource ID;
being generated by using an information target ID; and
being generated by using a group ID.

12. The method according to claim 1, further comprising:
indicating, by using a transmission resource of the first information, whether the first information is assistance information.

13. The method according to claim 12, wherein if the first information is assistance information, the transmission resource of the first information comprises at least one of the following:
a physical sidelink feedback channel;
a physical sidelink data channel;
a resource in a dedicated resource pool;
a resource indicated in a trigger message for triggering transmission of assistance information;
a resource on a specific sub-band in a resource pool; and
a resource on a specific symbol or specific subframe in a resource pool.

14. The method according to claim 2, wherein in a case that the first device adds the time domain resource indication information of the first information to the first-stage sidelink control information and/or the second-stage sidelink control information:
the time domain resource indication information is indicated by a fifth indication field in the first-stage sidelink control information and/or the second-stage sidelink control information, wherein each codepoint of the fifth indication field corresponds to at least one piece of time domain resource indication information, wherein the time domain resource indication information comprises at least one of a time domain resource start position, a time domain resource end position, and a time domain resource length; wherein
the fifth indication field is an independent indication field, or the fifth indication field is a jointly coded indication field;
or,
at least one piece of time domain resource indication information is indicated by a bitmap in the first-stage sidelink control information and/or the second-stage sidelink control information, wherein the time domain resource indication information comprises at least one of a time domain resource start position, a time domain resource end position, and a time domain resource length.

15. The method according to claim 2, wherein in a case that the first device has time domain resource length indication information of the first information carried in the first-stage sidelink control information and/or the second-stage sidelink control information:
the time domain resource indication information is indicated by a sixth indication field in the first-stage sidelink control information and/or the second-stage sidelink control information, wherein each codepoint of the sixth indication field corresponds to one time domain resource length; wherein
the sixth indication field is an independent indication field, or the sixth indication field is a jointly coded indication field.

16. The method according to claim 2, wherein in a case that the first device adds the frequency domain resource indication information of the first information to the first-stage sidelink control information and/or the second-stage sidelink control information:
the frequency domain resource indication information is indicated by a seventh indication field in the first-stage sidelink control information and/or the second-stage sidelink control information, wherein each codepoint of the seventh indication field corresponds to position information of at least one frequency domain resource, and the position information of the frequency domain resource comprises at least one of a frequency domain resource start position, a frequency domain resource end position, and a frequency domain resource length; wherein
the seventh indication field is an independent indication field, or the seventh indication field is a jointly coded indication field.

17. The method according to claim 2, wherein in a case that the first device adds the time domain resource position offset information of the first information to the first-stage sidelink control information and/or the second-stage sidelink control information:
the time domain resource position offset information is indicated by an eighth indication field in the first-stage sidelink control information and/or the second-stage sidelink control information, wherein each codepoint of the eighth indication field corresponds to one time domain offset length, and the eighth indication field is an independent indication field, or the eighth indication field is a jointly coded indication field.

18. The method according to claim 2, wherein in a case that the first device adds the frequency domain resource position offset information of the first information to the first-stage sidelink control information and/or the second-stage sidelink control information:
the frequency domain resource position offset information is indicated by a ninth indication field in the first-stage sidelink control information and/or the second-stage sidelink control information, wherein each codepoint of the ninth indication field corresponds to one frequency domain offset length, and the ninth indication field is an independent indication field, or the ninth indication field is a jointly coded indication field.

19. The method according to claim 2 or 4, wherein in a case that the first device adds the function indication information of the first information in the first information to the first-stage sidelink control information and/or the second-stage sidelink control information:
the function indication information is indicated by a tenth indication field in the first-stage sidelink control information and/or the second-stage sidelink control information, wherein each codepoint of the tenth indication field corresponds to one function of the first information, and the tenth indication field is an independent indication field, or the tenth indication field is a jointly coded indication field.

20. The method according to claim 2 or 5, wherein in a case that the first device adds the applicable range indication information of the first information in the first information to the first-stage sidelink control information and/or the second-stage sidelink control information:
the applicable range indication information is indicated by an eleventh indication field in the first-stage sidelink control information and/or the second-stage sidelink control information, wherein each codepoint of the eleventh indication field corresponds to one application scope of the first information, and the eleventh indication field is an independent indication field, or the eleventh indication field is a jointly coded indication field.

21. A resource processing method, applied to a second device and comprising:
receiving first information sent by a first device; and
selecting or reserving, based on decoding of the first information, a resource for data transmission.

22. The method according to claim 21, wherein the first information comprises at least one of the following:
time domain resource indication information;
frequency domain resource indication information;
time domain resource position offset information;
frequency domain resource position offset information;
identification information of a first-information transmit end;
identification information of a first-information receive end;
type indication information of the first information;
function indication information of the first information; and
applicable range indication information of the first information.

23. The method according to claim 21, wherein the first information is carried in target information, and the target information comprises at least one of the following:
sidelink control information;
downlink control information;
radio resource control information;
direct communication link radio resource control information; and
sidelink feedback control information; wherein
the sidelink control information further comprises: first-stage sidelink control information and second-stage sidelink control information.

24. The method according to claim 22, wherein the function indication information of the first information is used to indicate at least one of the following:
indicating that the second device preferentially selects or preferentially reserves a resource indicated by the first information;
indicating that the second device non-preferentially selects or non-preferentially reserves a resource indicated by the first information;
indicating that the second device is allowed to select or reserve only a resource indicated by the first information; and
indicating that the second device is not allowed to select or reserve a resource indicated by the first information.

25. The method according to claim 22, wherein the applicable range indication information of the first information is used to indicate at least one of the following:
indicating that the first information is applicable to a unicast transmission mode;
indicating that the first information is applicable to a groupcast transmission mode; and
indicating that the first information is applicable to a broadcast transmission mode.

26. The method according to claim 22, wherein the type indication information of the first information is used to indicate at least one of the following:
indicating that the first information is non-assistance information; and
indicating that the first information is assistance information.

27. The method according to claim 21, wherein before the selecting or reserving, based on decoding of the first information, a resource for data transmission, the method further comprises:
determining a type of the first information, wherein
a method for determining the type of the first information comprises at least one of the following:
determining, based on content indicated by first-information type indication information of the first information, whether the first information is assistance information;
determining, based on a format of the first information and/or a format length of the first information, whether the first information is assistance information;
determining, based on a scrambling RNTI of the first information, whether the first information is assistance information; and
determining, based on a transmission resource of the first information, whether the first information is assistance information.

28. The method according to claim 21, wherein the selecting or reserving, based on decoding of the first information, a resource for data transmission comprises:
if the first information is non-assistance information, excluding a resource indicated by the first information, during resource selection or reservation for data transmission;
or,
if the first information is assistance information, using a resource indicated by the first information as a candidate resource for data transmission, or reserving a resource indicated by the first information.

29. The method according to claim 21, wherein the selecting or reserving, based on decoding of the first information, a resource for data transmission comprises:
if the first information is assistance information, and identification information of a first-information receive end comprised in the first information matches identification information of the second device, using a resource indicated by the first information as a candidate resource, or reserving a resource indicated by the first information, during resource selection or reservation for data transmission;
or,
if the first information is assistance information, and identification information of a first-information receive end comprised in the first information does not match identification information of the second device, excluding a resource indicated by the first information, during resource selection or reservation for data transmission.

30. The method according to claim 21 or 24, wherein the selecting or reserving, based on decoding of the first information, a resource for data transmission comprises:
in a case that the first information is assistance information,
if the function indication information of the first information indicates that the second device preferentially selects or preferentially reserves the resource indicated by the first information, preferentially selecting or preferentially reserving the resource indicated by the first information;
or,
if the function indication information of the first information indicates that the second device non-preferentially selects or non-preferentially reserves the resource indicated by the first information, non-preferentially selecting or non-preferentially reserving the resource indicated by the first information;
or,
if the function indication information of the first information indicates that the second device is allowed to select or reserve only the resource indicated by the first information, selecting or reserving the resource indicated by the first information;
or,
if the function indication information of the first information indicates that the second device is not allowed to select or reserve the resource indicated by the first information, excluding the resource indicated by the first information.

31. The method according to claim 21 or 25, wherein the selecting or reserving, based on decoding of the first information, a resource for data transmission comprises:
in a case that the first information is assistance information,
if the applicable range indication information of the first information indicates that the first information is applicable to the unicast transmission mode, in a case that the second device is currently in unicast transmission, selecting or reserving, based on the resource indicated by the first information, a resource for data transmission;
or,
if the applicable range indication information of the first information indicates that the first information is applicable to the groupcast transmission mode, in a case that the second device is currently in groupcast transmission, selecting or reserving, based on the resource indicated by the first information, a resource for data transmission;
or,
if the applicable range indication information of the first information indicates that the first information is applicable to the broadcast transmission mode, in a case that the second device is currently in broadcast transmission, selecting or reserving, based on the resource indicated by the first information, a resource for data transmission.

32. The method according to claim 28, wherein the resource indicated by the first information comprises at least one of the following:
a time domain resource determined based on time domain resource indication information that is comprised in the first information;
a frequency domain resource determined based on frequency domain resource indication information that is comprised in the first information;
a time-frequency resource determined based on the time domain resource indication information and the frequency domain resource indication information that are comprised in the first information;
a time domain resource determined based on the time domain resource indication information and time domain resource position offset information that are comprised in the first information;
a frequency domain resource determined based on the frequency domain resource indication information and frequency domain resource position offset information that are comprised in the first information; and
a time-frequency resource determined based on the time domain resource indication information, the time domain resource position offset information, the frequency domain resource indication information, and the frequency domain resource position offset information that are comprised in the first information.

33. An information sending apparatus, applied to a first device and comprising:
a sending module, configured to send first information to at least one second device, wherein the first information is used to assist the second device in selecting or reserving a resource for data transmission.

34. The apparatus according to claim 33, wherein the first information comprises at least one of the following:
time domain resource indication information;
frequency domain resource indication information;
time domain resource position offset information;
frequency domain resource position offset information;
identification information of a first-information transmit end;
identification information of a first-information receive end;
type indication information of the first information;
function indication information of the first information; and
applicable range indication information of the first information.

35. The apparatus according to claim 33, wherein the first information is carried in target information, and the target information comprises at least one of the following:
sidelink control information;
downlink control information;
radio resource control information;
direct communication link radio resource control information; and
sidelink feedback control information; wherein
the sidelink control information further comprises: first-stage sidelink control information and second-stage sidelink control information.

36. A resource processing apparatus, applied to a second device and comprising:
a receiving module, configured to receive first information sent by a first device; and
a processing module, configured to: based on decoding of the first information, select or reserve a resource for data transmission.

37. The apparatus according to claim 36, wherein the processing module comprises:
a first processing submodule, configured to: if the first information is non-assistance information, exclude a resource indicated by the first information, during resource selection or reservation for data transmission;
and/or,
a second processing submodule, configured to: if the first information is assistance information, use a resource indicated by the first information as a candidate resource for data transmission, or reserve a resource indicated by the first information.

38. The apparatus according to claim 36, wherein the processing module comprises:
a third processing submodule, configured to: if the first information is assistance information, and identification information of a first-information receive end comprised in the first information matches identification information of the second device, use a resource indicated by the first information as a candidate resource or a reserved resource for data transmission;
and/or,
a fourth processing submodule, configured to: if the first information is assistance information, and identification information of a first-information receive end comprised in the first information does not match identification information of the second device, exclude a resource indicated by the first information, during resource selection or reservation for data transmission.

39. An electronic device, comprising a processor, a memory, and a program or instructions stored in the memory and capable of running on the processor, wherein when the program or instructions are executed by the processor, the steps of the information sending method according to any one of claims 1 to 20 are implemented; or when the program or instructions is executed by the processor, the steps of the resource processing method according to any one of claims 21 to 32 are implemented.

40. A readable storage medium, wherein the readable storage medium stores a program or instructions, and when the program or instructions are executed by a processor, the steps of the information sending method according to any one of claims 1 to 20 are implemented; or when the program or the instruction is executed by a processor, the steps of the resource processing method according to any one of claims 21 to 32 are implemented.

41. A chip, comprising a processor and a communications interface, wherein the communications interface is coupled to the processor, and the processor is configured to run a program or instructions to implement the steps of the information sending method according to any one of claims 1 to 20 or the steps of the resource processing method according to any one of claims 21 to 32.
